(19) Europäisches Patentamt
European Patent Office
Office européen des brevets

(11) EP 3 928 482 B1

(12) **EUROPEAN PATENT SPECIFICATION**

(45) Date of publication and mention of the grant of the patent:
**02.04.2025 Bulletin 2025/14**

(21) Application number: **20712764.8**

(22) Date of filing: **21.02.2020**

(51) International Patent Classification (IPC):
***H04L 27/02*** *(2006.01)* ***H04L 27/26*** *(2006.01)*
***H04W 52/02*** *(2009.01)*

(52) Cooperative Patent Classification (CPC):
**H04L 27/2602; H04L 27/02; H04W 52/0216; H04W 52/0229; H04W 52/028;** H04L 27/26025; Y02D 30/70

(86) International application number:
**PCT/US2020/019255**

(87) International publication number:
**WO 2020/172549 (27.08.2020 Gazette 2020/35)**

(54) **WAKE-UP SIGNAL FOR POWER SAVING**

WACH-SIGNAL ZUR STROMSPARUNG

SIGNAL DE RÉVEIL POUR ÉCONOMIE D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2019 US 201962809067 P**

(43) Date of publication of application:
**29.12.2021 Bulletin 2021/52**

(73) Proprietor: **InterDigital Patent Holdings, Inc.**
**Wilmington, DE 19809 (US)**

(72) Inventors:
- **SAHIN, Alphan**
**Westbury, NY 11590 (US)**
- **YANG, Rui**
**Greenlawn, NY 11740 (US)**
- **BALA, Erdem**
**NY 11554 (US)**
- **XI, Fengjun**
**San Diego, CA 92126 (US)**

(74) Representative: **AWA Sweden AB**
**Box 5117**
**200 71 Malmö (SE)**

(56) References cited:
**US-A1- 2017 332 327** **US-A1- 2018 041 959**

- **XIAOFEI WANG (INTERDIGITAL): "On the Coexistence of 802.11ax and 802.11ba Signals", vol. 802.11ba, no. 1, 10 May 2017 (2017-05-10), pages 1 - 21, XP068115848, Retrieved from the Internet <URL:https://mentor.ieee.org/802.11/dcn/17/11-17-0659-01-00ba-on-the-coexistence-of-802-11ax-and-802-11ba-signals.pptx> [retrieved on 20170510]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

# Description

## BACKGROUND

Mobile communications are in continuous evolution and are already at the doorstep of their fifth incarnation - 5G.

US 2017/0332327 discloses a power saving station that integrates a low power consumption wake-up receiver with wideband wireless of main radio. The low power wake-up receiver of power saving station receives a wake-up request signal sent from the wireless network and wakes up the main radio of the station to communicate with the wireless network over wideband frequency channel. The wake-up request signal is transmitted over a narrow band frequency channel and can be addressed to a single station or multiple of stations via OFDMA in wideband channel.

US 2018/0041959 discloses a method for waking up one of a plurality of radio communications modules (RCMs) of a first station. The method includes receiving a wake-up configuration from a second station, placing the plurality of RCMs into a sleeping mode, receiving a wake-up signal from the second station on an auxiliary low-power radio receiver of the first station, determining a first RCM of the plurality of RCMs to wake up in accordance with the wake-up configuration. and waking up the first RCM from the sleeping mode to communicate with the second station.

Xiaofei Wang (Interdigital): "On the Coexistence of 802.11ax and 802.11ba Signals", IEEE802.11-17/0659r1, May 2017 introduces a narrow band sequence-based on-off keying (OOK) scheme with waveform coding (WFC) which allows coexistence with 802.11ax transmissions without interference between the two signals and increases the WUR coverage range.

## SUMMARY

The invention is defined in the independent claims. Preferred embodiments are set forth in the dependent claims.

Systems, methods, and instrumentalities associated with wake-up signals may be provided, e.g., for power saving. The systems, methods, and instrumentalities may include interference-free wake-up signal (WUS)/ go-to-sleep signal (GOS) and/or ON/OFF keying (OOK) waveform enhancements. The systems, methods, and instrumentalities for interference-free WUS/-GOS may include wake-up control signal format and content and/or user multiplexing and reference symbols for WUS/GOS signaling. The systems, methods, and instrumentalities for OOK waveform enhancements may include one or more of uniform WUS/GUS using time domain masking based OOK, OOK randomization, and/or using orthogonal frequency division multiplexing (OFDM) symbols with multiple subcarrier spacing values for OOK symbols.

Systems, methods, and instrumentalities may be provided for a wireless transmit/receive unit (WTRU) to receive a signal from a network while the WTRU is in a sleep state. The signal may be or may include an OOK signal. The OOK signal may be or may include a set of OOK symbols. The set of OOK symbols may be or may include a set of OFDM symbols. The signal may include multiple levels of information. For example, the signal may indicate a first level of information, e.g., whether to wake up a WTRU from a sleep state or maintain sleep state. The signal may indicate a second level of information, e.g., WTRU ID, group WTRU ID, information about physical downlink control channel (PDCCH) resource to monitor, and/or additional information for a WTRU and/or a group of WTRUs to perform.

The WTRU may detect a bit pattern in the signal. The WTRU may detect a bit pattern based on detecting a set of ON/OFF bits. For example, the WTRU may use energy detection to detect a set of ON/OFF bits. If the WTRU detects energy above a threshold value, the WTRU may determine that the bit corresponds to an ON bit. If the WTRU detects energy below a threshold value, the WTRU may determine that the bit corresponds to an OFF bit.

The WTRU may determine whether the bit pattern matches a configured bit pattern. The configured bit pattern may indicate to the WTRU to wake up from the sleep state. For example, the configured bit pattern may be similar to (e.g., the same as) a WUS. If the WTRU determines that the bit pattern matches the configured bit pattern, the WTRU may wake up from the sleep state. If the WTRU determines that the bit pattern does not match the configured bit pattern, the WTRU may maintain the sleep state. The bit pattern that does not match to the configured bit pattern may be correspond to (e.g., considered as) a GOS.

If the WTRU wakes up from the sleep state (e.g., in response to the bit pattern matching the configured bit pattern), the WTRU may decode a set of sequences in the signal. The WTRU may determine whether the set of sequences matches a configured sequence set. If the set of sequences matches a configured sequence set, the WTRU may perform a task (e.g., determine physical downlink control channel (PDCCH) resource to monitor) based on the configured sequence set. The set of sequences may be or may include one or more of: information of a PDCCH location, a WTRU ID, or a WTRU group ID.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A.

FIG. 1D is a system diagram illustrating a further example RAN and a further example CN that may be used within the communications system illustrated in FIG. 1A.

FIG. 2A illustrates an example of On duration and OFF duration with discontinuous reception (DRX) cycle.

FIG. 2B illustrates an example of a WUS with a DRX operation.

FIG. 3 illustrates an example of an OFDM-based OOK waveform generation with Manchester Encoding.

FIG. 4 illustrates an example of an OOK waveform with Manchester Encoding.

FIG. 5 illustrates an example of orthogonal OOK.

FIG. 6 illustrates an example of time-domain characteristics of an orthogonal OOK waveform.

FIG. 7 illustrates an example of frequency domain characteristics of an orthogonal OOK waveform.

FIG. 8 illustrates an example of a frame format for a wake-up control signal (WUCS).

FIG. 9 illustrates examples of different options for synchronization (SYNC) and information subsequence.

FIG. 10 illustrates an example of simultaneous SYNC transmission and WTRU multiplexing.

FIG. 11 illustrates an example of using OOK and OFDM transmission(s) for WUS/GOS.

FIG. 12 illustrates an example receiving implementation at a WTRU.

FIG. 13 illustrates an example of masking based OOK generation.

FIG. 14 illustrates an example of a beam-based OOK generation.

FIG. 15 illustrates an example OOK WUS using energy detection and sequence detection.

## DETAILED DESCRIPTION

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS.

1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Discontinuous reception (DRX) operation may be performed. A DRX may be used, e.g., for battery savings. During a DRX, a wireless transmit/receive unit (WTRU) may skip monitoring (e.g., not monitor) a downlink (DL) control channel, such as a physical downlink control channel (PDCCH). In a radio resource control (RRC) connected mode, a WTRU may use a connected mode DRX (C-DRX). FIG. 2A illustrates an example of ON duration and OFF duration with a DRX cycle. A WTRU may monitor a configured PDCCH during an ON duration period, and/or the WTRU may sleep (e.g., not monitor the PDCCH) during an OFF duration. PDCCH may be used herein as a non-limiting example of a DL control channel.

A DRX cycle may be a cycle (e.g., a repetition or periodic repetition) of ON duration and OFF duration. A WTRU may monitor a PDCCH during an ON duration, and/or a WTRU may skip monitoring a (e.g., any) PDCCH during an OFF duration.

A DRX cycle may include a short DRX cycle and/or a long DRX cycle. A WTRU may use a short DRX cycle for a period of time and may use a long DRX cycle.

A DRX inactivity timer may determine or may be used to determine a time (e.g., in terms of TTI duration), for example, after a PDCCH occasion. In a PDCCH occasion, a PDCCH (e.g., a successfully decoded one) may indicate an uplink (UL) and/or DL user data transmission (e.g., an initial UL and/or DL user data transmission). A WTRU may use a DRX inactivity timer to determine when to go to an OFF duration.

A DRX ON duration may be the duration at the beginning of a DRX cycle.

A DRX ON duration timer may determine or may be used to determine a number of PDCCH occasion(s), such as a consecutive number of PDCCH occasion(s). The PDCCH occasion(s) may be or may need to be monitored and/or decoded (e.g., by a WTRU), for example, after wakeup from the DRX cycle and/or at the beginning of a DRX cycle.

A PDCCH occasion may include a time period that includes a PDCCH (e.g., a symbol, a set of symbols, a slot, and/or a subframe).

A DRX retransmission timer may determine or may be used to determine a number of PDCCH occasion(s) (e.g., a consecutive number of PDCCH occasion(s)), for example, to monitor when a WTRU expects a retransmission. A DRX retransmission timer may determine or may be used to determine a duration (e.g., a maximum duration) until a DL retransmission is received or a duration (e.g., a maximum duration) until a grant for an UL retransmission is received.

A DRX short cycle may be a DRX cycle (e.g., the first DRX cycle) that the WTRU enters after an expiration of a DRX inactivity timer. A WTRU may be in a short DRX cycle if (e.g., until) the DRX short cycle timer expires. If the DRX short cycle timer expires, the WTRU may use a long DRX cycle.

A DRX short cycle timer may determine or may be used to determine a number of subframes (e.g., a number of consecutive subframe(s)) that the WTRU may follow the short DRX cycle, for example, after the DRX inactivity timer has expired.

FIG. 2A illustrates an example of an ON duration and an OFF duration with a DRX cycle.

During an OFF duration, a WTRU may skip measuring or reporting a channel status information (CSI) in a subframe. The subframe may be configured to measure and/or report a CSI reporting, such as a periodic CSI reporting.

A WTRU may monitor (e.g., may need to monitor) a PDCCH or a PDCCH occasion(s) during an active time. The active time may occur during an ON duration. The active time may occur during an OFF duration. The active time may begin during an ON duration and continue during an OFF duration. The active time and the active time of a DRX cycle may be used interchangeably herein.

An active time may include a time during which one or more of the following is true: a DRX timer may be running (e.g., an ON Duration timer, an inactivity timer, a retransmission timer (e.g., in the DL and/or the UL), or a random access contention resolution timer); a scheduling request may be sent (e.g., on physical uplink control channel (PUCCH)) and/or be pending; a PDCCH indicating a different (e.g., new) transmission addressed to a cell radio network temporary identifier (C-RNTI) of a MAC entity of the WTRU may not have been received after a successful reception of a random access response for the random access preamble that was not selected by the MAC entity among contention-based random access preambles.

Wake-up signal (WUS)/go-to-sleep signal (GOS) may be used. A WUS and/or GOS may be used, for example, with a DRX operation. A WUS/GOS may be associated with one or more DRX cycles. A WUS/GOS may be transmitted and/or received (transmitted/received) prior to an associated time and/or a part of a DRX cycle, such as an associated DRX cycle.

FIG. 2B illustrates an example of a WUS with a DRX operation. If a WTRU receives a WUS, the WTRU may monitor a PDCCH in ON durations for one or more DRX cycles. If a WTRU receives a GOS, the WTRU may skip monitoring the PDCCH in ON durations for one or more DRX cycles and/or may stay (e.g., mantain) in a sleep mode (e.g., a deep sleep).

A system or a network may use a WUS(s) and/or a GOS(s).

An orthogonal ON/OFF keying (OOK) may be used. There may be several ways to generate OOK symbols and/or encoded coded OOK symbols. In examples, an OFDM or DFT-s-OFDM implementation may be used to generate one or more OOK symbols. FIG. 3 illustrates an example of an OFDM-based OOK waveform generation with Manchester Encoding. As shown in FIG. 3, sequences s and 0 may be used to generate one or more OOK ON and OFF symbols in time domain, respectively. s may be ON symbol generator sequence. The OOK symbol duration may be a portion of (e.g., half of) the DFT-s-OFDM symbol duration.

The input of DFT-s-OFDM may be orthogonal to each other in time domain, for example, to enable detection (e.g., simple detection) at a receiver. For example, with Manchester Encoding in time, $\mathbf{x_1} = (\mathbf{s}_1, \mathbf{0})$ and $\mathbf{x_2} = (\mathbf{0}, \mathbf{s_1})$, $\mathbf{s_1}$ and $\mathbf{s_2}$ may be non-zero vectors of complex numbers with length $M/2$. Time domain signals may be illustrated in FIG. 4. FIG. 4 illustrates an example of an OOK waveform with Manchester Encoding.

In examples, multiple OOK symbols within an OFDM symbol duration (e.g., one OFDM symbol duration) may be generated by exploiting a structure of DFT-s-OFDM. FIG. 4 illustrates an example OFDM-based OOK waveform generation with Manchester encoding. The inputs of DFT-s-OFDM may be (e.g., first) divided into $K$ parts, and a sequence $\mathbf{s}_i \in \mathbb{C}^{M_\mathrm{S} \times 1}$ may be placed into the ith corresponding part depending on the bit (e.g., $b_i$, for $i$ = 1,2, ..., $K$). For example, if $b_i$ = 1, the ith corresponding part at the input of DFT-s-OFDM may be set to $\boldsymbol{s_i}$. If $b_i \neq 1$, it may be $\mathbf{0} \in \mathbb{C}^{M_\mathrm{S} \times 1}$. The output of the DFT-s-OFDM may be an oversampled version of the input of the DFT-s-OFDM, e.g., with a certain pulse shape (e.g., Dirichlet sinc function without frequency domain spectral shaping (FDSS)). The sub-time unit ON and OFF symbols may be generated at the output of DFT-s-OFDM. This (e.g., simple) structure may allow an orthogonality with other subcarriers. This structure may enable an orthogonal transmission of other channels (e.g., physical downlink shared channel (PDSCH)). FIG. 5 illustrates an example of orthogonal OOK.

As shown in FIG. 5, the first input (e.g., $M_\mathrm{h}$) and/or the last input (e.g., $M_\mathrm{t}$) of the DFT-s-OFDM may be set to zeros, e.g., to improve the shaping in time domain. FDSS (e.g., in addition to and/or instead of) may be utilized, e.g., to reduce a sidelobe of the Dirichlet sinc function. The energy during a CP duration may be minimized, e.g., by choosing $M_\mathrm{t} \geq \left\lceil \frac{T_\mathrm{cp}}{T_\mathrm{idft}} M \right\rceil$. Out-of-band (OOB) emission characteristics of the wake-up signal may be improved. In examples, $b_i$ for $i$ = 1,2, ..., $K$ may be set to values (e.g., certain fix values) to generate reference symbols for a channel estimation at a receiver. Multiple DFT-s-OFDM symbol(s) may be transmitted (e.g., transmitted back-to-back) for OOK sequences, such as larger OOK sequences.

FIG. 6 illustrates an example of time-domain characteristics of an orthogonal OOK waveform. FIG. 6 illustrates one or more example samples of a time domain signal at an output of an IDFT block. The samples that have energy detected (e.g., above a threshold value) may correspond to "1" bits at an input and the samples that have little or no energy (e.g., energy below a threshold value) may correspond to "0" bits at the input, e.g., as shown in FIG. 6. As described herein, a WTRU may detect an ON/OFF bit (e.g., ON/OFF bit patterns), e.g., using energy detection. A WTRU may detect sequence(s) associated with the OOK waveform. FIG. 7 illustrates an example of frequency domain characteristics of an orthogonal OOK waveform. In FIG. 6 and/or FIG. 7, time and/or frequency domain characteristics of an orthogonal OOK may be illustrated for a 4 MHz signal. It may be assumed that the IDFT size $N = 4096$ and $M = 22 \times 12 = 264$, and/or that an impulse response of the FDSS filter in time may be [0.28 1 0.28]. $M_h$ and/or $M_t$ may be set to $M_h = 2$ and/or $M_t = 20$, e.g., to avoid energy during a CP duration. A Zadoff-Chu sequence of length $M_s = 11$ may be chosen (e.g., randomly chosen) for $s_i$. $K = 22$ OOK symbols may be transmitted in time domain. In FIG. 6, time domain characteristics of a generated signal after CP addition may be given for $b$ = (1,1,0,0,0,1,0,0,0,1,1,0,1,1,1,0,1,1,1,0,0,1). The sidelobe of the Dirichlet sinc function may be efficiently suppressed by the FDSS. The energy during the CP duration may be low (e.g., always very low since $M_t = 20$). A good (e.g., excellent) OOB emission (e.g., illustrated in FIG. 7) may be achieved. The discontinuity between the DFT-s-OFDM symbols may be low.

WUS and/or GOS may be generated. A signal may be generated to include WUS, GOS, and/or some other signals. The generated signal described herein may include one or more of the following. By generating the signal (e.g., including WUS, GOS, and/or some other signals), a WTRU may operate less than a full power if the WUS and/or GOS is demodulating. For example, a WTRU may not operate (e.g., may not be required to operate) with a full power (e.g., a part of WTRU RF and/or baseband may still be turned off) if the WUS and/or GOS are demodulating. Multiple access in time, frequency, or code domain may be allowed. An accurate synchronization may be allowed. Information (e.g., rich information) related to WTRU ID or WTRU group ID, and/or dedicated physical control channel (DPCCH) resource information during a power saving ON period, etc., may be allowed to be carried (e.g., in a signal generated to include WUS, GOS, and/or other signals as described herein).

WUS/GOS with reduced interference (e.g., interference-free WUS/GOS) may be used.

A format for wake-up control signal (WUCS) may be used.

The WUCS may include a signal that is used to control and/or configure a behavior(s) of a WTRU(s) during a power saving ON period. The WUCS may be used to control a designated WTRU (e.g., some or all WTRUs in a cell), for example, on when and/or how to wake up if the WUCS signals the WTRU to wake up. The WUCS may signal the WTRU to continue sleeping (e.g., maintain in the sleep state) and/or how long to stay in sleep (e.g., the length in time).

A WUCS frame may include one or more portions (e.g., three portions). The portions of the WUCS frame may include one or more of a synchronization signal, a WUCS information, and/or a reference signal (RS). One or more of the portions may be generated and/or represented in a time domain. One or more of the portions may be generated and/or represented in a frequency domain. In examples, portions may be generated and/or represented in a hybrid of time and frequency domains (e.g., some portion(s) generated/represented in the time domain and other portion(s) generated/represented in the frequency domain. FIG. 8 illustrates an example of a frame format for a WUCS. As shown in FIG. 8, a frame format for a WUCS may include a SYNC, WUCS information, and a RS. The WUCS information portion shown in FIG. 8 may have data indicated, e.g., by the bits and/or sequences. The SYNC portion shown in FIG. 8 may be used for synchronization. The RS portion shown in FIG. 8 may be used for reference signals.

WUCS portions may be used (e.g., concatenated) in different orders. For example, the WUCS information sequence shown in FIG. 9 may occur before, after, and/or between SYNC sequence as shown in FIG. 9. Different allocation of one or more of the portions may indicate certain information. A relative allocation between the portions (e.g., fields as shown in FIG. 9) may carry certain information. The relative allocation between one or more of the portions may be predefined or be blindly detected. FIG. 9 illustrates examples of different options for SYNC and information subsequence. As shown in FIG. 9, different orders of the SYNC sequences and information field in time may be used (e.g., to indicate certain information).

A WUCS may be generated. A WUCS or a part of the WUCS may be represented using sequences and/or symbols, for example, time domain orthogonal ON/OFF keying (OOK) sequences and/or OOK symbols. OOK sequences may include sequences of 0s and 1s. OOK symbols may indicate corresponding signals in time (e.g., by a rectangular wave). In examples, "0" may represent "OFF" symbol and "1" may represent "ON" symbol. The sequences may be denoted as $\{b_i, i = 1, ... , K\}$. $K$ may be the number of OOK sequences that may be used for different purposes (e.g., as described herein).

The OOK sequences and/or symbols may be further coded. For example, the OOK sequences and/or symbols may map "0" and "1" to binary sequences (e.g., another binary sequences). In Manchester encoding, bit "0" may be mapped to (0 1), and/or bit "1" may be mapped to (1 0). In examples, bit "0" and bit "1" may be mapped to different bit patterns, e.g., (0 1 0 1 0 1) and (1 01 0 1 0), respectively. The OOK sequences and/or symbols may be received by using a non-coherent detector, e.g., if the WTRU receiver has that capability during a sleeping duration. The non-coherent detector may include an envelope detector and/or an energy detector.

OOK sequences and/or symbols (e.g., ($b_1$, $b_2$, ... , $b_K$) as shown in FIG. 5) may be used for synchronization by a WTRU.

OOK sequences and/or symbols may be used (e.g., used to indicate) as WTRU IDs or WTRU group IDs, e.g., if the OOK sequences and/or symbols are orthogonal to each other. OOK sequences and/or symbols may be used as WTRU IDs or WTRU group IDs, e.g., if the OOK sequences and/or symbols have a low or very low correlation among them.

OOK sequences and/or symbols may be used, e.g., if the OOK sequences and/or symbols are orthogonal to each other or have a low or very low correlation among them, to distinguish between signals. For example, OOK sequences and/or symbols may be used to distinguish between WUS and GOS if the OOK sequences and/or symbols are orthogonal to each other. OOK sequences and/or symbols may be used to distinguish between the WUS and the GOS if the OOK sequences and/or symbols have a low or very low correlation among them. OOK sequences and/or symbols may be used to distinguish any other signals that may control or signal the behavior of the WTRU in the power saving ON period if the OOK sequences and/or symbols are orthogonal to each other and/or have a low or very low correlation among them. OOK sequences and/or symbols may be used to distinguish any other signals that may control or signal the behavior of the WTRU in other power saving related mechanisms (e.g., different power saving cycles) if the OOK sequences and/or symbols are orthogonal to each other and/or have a low or very low correlation among them. A WUS symbol may be constructed with (0,1,0,1,...,0,1) sequence (e.g., only (0,1,0,1,...,0,1) sequence). A GOS symbol may be constructed with (1,0,1,0,....,1,0) sequence. Hadamard codes may be used for GOS and WUS signals. The WUS symbol may be predefined. For example, (0,1,0,1,...,0,1) sequence may indicate a WUS symbol. If the WTRU receives (0,1,0,1, ...) sequence, the WTRU may wake-up. The GOS symbol may be predefined. For example, (1,0,1,0,....,1,0) sequence may indicate a GOS symbol. If the WTRU receives (1,0,1,0,....,1,0) sequence, the WTRU may go to sleep. Hadamard codes described herein may be an example of a sequence that may be used for the selection of the predefined sequences.

An OOK sequence (e.g., ($b_1$, $b_2$, ... , $b_K$)) may include a subsequence for SYNC. The subsequence for SYNC may be predefined. An OOK sequence may include a subsequence (e.g., alone or in addition to the subsequence for SYNC) for additional wake-up and/or WTRU/WTRU group information, which may include RS(s) in time and/or frequency domain.

One or more (e.g., pre-defined) sequences may be used for SYNC, wake-up information, WTRU/WTRU group information, WTRU ID, WTRU group ID, and/or the like. The SYNC, wake-up information, WTRU/WTRU group information, WTRU ID, WTRU group ID described herein may be examples of information for the sequences and may not be limited to the SYNC, wake-up information, WTRU/WTRU group information, WTRU ID, WTRU group ID.

A SYNC (e.g., a SYNC field) and user multiplexing may be simultaneous.

A sequence of OOK symbols or a set of OOK symbols (e.g., coded or not coded) may be used for a SYNC (e.g., a SYNC field). If a set of possible OOK sequences is used for SYNC (e.g., SYNC sequences), an (e.g., each) OOK sequence may be associated with a cell ID, a WTRU group ID, or a WTRU ID, which in examples, may enable cell-wise wake-up, group wake-up, or individual wake-up, respectively.

Sequences (e.g., the sequences $\{\boldsymbol{s}_i\}$ that are used to generate "ON" symbol during an OOK sequence for the SYNC sequence) may be used to represent one or more of a cell ID, a WTRU group ID, or a WTRU ID. Some of the sequences may be used as a RS(s), e.g., for a coherent detection of the sequences $\{\boldsymbol{s}_i\}$.

In examples, OOK symbol generation with DFT-s-OFDM may allow a coherent detection of the elements of sequences $\boldsymbol{s}_i$. The sequences $\boldsymbol{s}_i$ may be used to carry information (e.g., information related to WTRU power saving) and/or enable simultaneous SYNC in time (e.g., as shown in FIG. 10). The sequences $\boldsymbol{s}_i$ may be used to multiplex different WTRUs (e.g., by using different sequences) and/or enable simultaneous SYNC in time (e.g., as shown in FIG. 10). A SYNC sequence(s) may be based on a cell ID. A SYNC sequence(s) may indicate a GOS and/or a WUS. For a WTRU ID, orthogonal $\boldsymbol{s}_i$ may be used to wake up and/or sleep intended WTRUs. Zadoff-Chu sequences may be utilized for different WTRUs, e.g., to improve a detection, such as a coherent detection of the element of sequences $\boldsymbol{s}_i$. Zadoff-Chu sequences may be utilized for different WTRUs to transmit information related to WTRU IDS or WTRU group IDs. Zadoff-Chu sequences may be utilized, e.g., for different WTRUs, to transmit information related to whether a WTRU should be woken up and/or should continue to sleep during the WTRU power saving ON or OFF periods. Zadoff-Chu sequences may be utilized, e.g., for different WTRUs, to transmit information related to PDCCH allocations in time and/or frequency during a power saving ON period.

Some of sequences $\boldsymbol{s}_i$ may be used as a RS(s), e.g., if a coherent detection is used by a WTRU. The RSs may be inserted in a frequency domain. FIG. 10 illustrates an example of simultaneous SYNC transmission and WTRU multiplexing.

A WUCS information field may be used. A WUCS information field may be presented using OOK sequences. Some of the OOK sequences may represent certain information, e.g., WUS and/or GOS. The sequences $\{s_i\}$ that are used to generate the "ON" symbol of an OOK signal (e.g., OOK waveform) may carry other information (e.g., other additional information). For example, if an OOK sequence represents "Wake up in the next Power Saving ON duration to check DPCCH," the sequences $\{s_i\}$ that are used to generate the ON symbol(s) of the OOK waveform may carry information about the location of a PDCCH (e.g., in time-frequency resource). The sequences $\{s_i\}$ may carry other information (e.g., cell ID, WTRU, and/or WTRU group ID). A SYNC frame may carry such information. Some of the sequences may be used as a RS(s), e.g., for some of the "ON" OOK symbol/duration.

In examples, SYNC sequences may include a plurality of OOK waveforms. The information subsequence (e.g., field) may include a plurality of OFDM symbols. The plurality of OFDM symbols may be modulated with some sequences and/or modulation symbols (e.g., quadrature phase shift keying (QPSK) as illustrated in FIG. 11). A receiver may demodulate an OFDM waveform(s) to receive additional information related to a WUS, a GOS, and/or any other power saving related information, e.g., after the receiver achieves a SYNC with OOK sequences. The OFDM waveform(s) (e.g., OFDM symbol(s)) may include reference symbols and/or a sequence(s) related to WUS and/or GOS, e.g., for one or more WTRUs. The WTRUs may be multiplexed on a same subcarrier, e.g., by using orthogonal sequences. The orthogonal sequences may be generated by using a cyclic shift of a time domain signal (e.g., of unimodular sequence in frequency). The SYNC sequence may be a function of a cell ID and the WTRU ID or WTRU group ID, e.g., to decrease the interference. FIG. 11 illustrates an example of using OOK and OFDM transmission(s) for WUS/GOS.

One or more reference signals may be added to a WUCS(s). Additional RS(s) may be added to a WUCS(s). The RS(s) may be presented in time domain, e.g., as the input to the DFT of DFT-s-OFDM operation. The RS(s) may be presented in frequency domain, e.g., as the input to the DFT of OFDM operation. The RS(s) may be used to achieve a more coherent detection of the sequences $\{s_i\}$ in a WUCS field.

A receiving implementation may be used. A receiving implementation may include one or more of the features illustrated in FIG. 12 and/or as described herein.

It may be assumed that a WUS/GOS includes SYNC and/or WTRU/WTRU group ID in a time domain OOK format. It may be assumed that a WUS/GOS includes PDCCH resource allocation information, e.g., in the sequences that are used to generate an OOK waveform. A receiving implementation (e.g., similar to the one shown in FIG. 12) may be used. FIG. 12 illustrates an example receiving implementation at a WTRU.

OOK waveform enhancement may be performed.

OOK randomization may be used, e.g., for OOK waveform enhancement.

Sequences on different parts at an input of DFT-s-OFDM (e.g., shown in FIG. 5) may be different from each other. The sequences on different parts at an input of DFT-s-OFDM may be different from each other to randomize (e.g., increase a randomness of) a signal. The sequences on different parts at an input of DFT-s-OFDM may be different from each other to avoid high power spectral density on certain tone(s) in a spectrum. For example, different roots of Zadoff-Chu sequences may be used at different parts at the input of DFT-s-OFDM. Different roots of Zadoff-Chu sequences may be chosen based on a pseudo random number, e.g., linear feedback shift register. In examples, cyclic shifted versions of a Zadoff-Chu sequence(s) may be utilized at different parts. The choice of the sequence may be a function of a WTRU index and/or a parameter(s) related to a cell ID.

OOK symbols with OFDM symbols with multiple subcarrier spacing values may be used, e.g., for OOK waveform enhancement.

In examples, OOK symbols may be generated by using OFDM symbols with a high (e.g., higher) subcarrier spacing (e.g., a shorter OFDM symbol duration), e.g., 30 kHz or 60 kHz. Bit "1" may be encoded with an existence of an OFDM symbol(s). A non-existence of an OFDM symbol(s) (e.g., nothing) may be transmitted for bit "0."

Uniform OOK symbols for mask-based OOK may be used, e.g., for OOK waveform enhancement.

In examples, an OOK signal may be generated by generating an OFDM symbol and (e.g., then) masking the OFDM symbol (e.g., masking the time domain OFDM signal as shown in FIG. 13). The OOK signal may be further processed. For example, the OOK signal may be filtered.

A sequence $y_{(Mx1)}$ of length M may be loaded into a set of interleaved subcarriers, for example, in a predetermined band of a channel. For example, in an interleaved allocation, zeros may be mapped to the subcarriers that are between two subcarriers loaded with coefficients from the sequence. The number of zeros may be (L-1). L may be referred to as the interleaving factor.

The output of the IDFT may have a repetitive structure (e.g., with the type of allocation herein). The output of the IDFT may include repetitions of a time domain signal. In FIG. 13, the signal that repeats itself may be denoted with a vector **x.** The number of repetitions of the signal may be equal to L. Vector **x** and sequence **y** may be related to IDFT, e.g., up to a scaling factor: $\mathbf{x} = \text{IDFT}(y)/L$.

Some (e.g., each) of the repetitive signals may be masked to create an OOK signal. As shown in FIG. 13, each **x** may be masked. For example, each **x** may be multiplied with a 1 (ON) or a 0 (OFF), creating an OOK signal. ON and OFF signals may be created by masking the OFDM symbol with other pairs of integers other than 1 and 0.

A WTRU may detect ON and OFF bits and/or ON and OFF bit patterns, e.g., upon a reception of an OFDM signal, for example as shown in FIGs. 6, 10, and/or 15. The WTRU may detect ON and OFF bits/bit patterns which may provide a first level of information. For example, the WTRU may detect the ON and OFF bits/bit patterns, e.g., by using energy detection. If the detected energy is above a threshold (e.g., a preconfigured threshold value), the WTRU may detect an ON bit (e.g., as shown in FIGs. 6, 10, and/or 15). If the detected energy is below a threshold (e.g., a preconfigured threshold value), the WTRU may detect an OFF bit (e.g., as shown in FIGs. 6, 10, and/or 15). As shown in FIGs. 6, 10, and/or 15, the WTRU may detect the ON/OFF bit patterns, e.g., using energy detection. The bit patterns may be or may include binary digits, e.g., (1 1 0 0 0 1 0 0 0 1 1 0 1 1 1 0 1 1 1 0 0 1) as shown as an example in FIGs. 6 and/or 15. The detected bit pattern may carry information (e.g., a first level of information). For example, the bit pattern may be or may include an indication (e.g., a WUS) to the WTRU (e.g., and/or a group of WTRUs) to wake-up from a sleep state. The bit pattern may be or may include an indication (e.g., a GOS) to the WTRU (e.g., and/or a group of WTRUs) to maintain in the sleep state.

If the WTRU (e.g., and/or the group of WTRUs) wakes up from the sleep state, the WTRU may detect sequence(s) (e.g., where sequence(s) may refer to one or more sequences, a set of sequences, sequence sets, order of sequences, etc.), such as **x** and/or **y** as described herein or sequence(s) $\{\boldsymbol{s}_i\}$ shown in FIGs. 6, 10, and/or 15. The sequence(s) may carry information (e.g., a second level of information). For example, the sequence(s) may carry a WTRU group ID and/or a WTRU ID. The sequence(s) may include information about an upcoming PDCCH resource (e.g., location of the PDCCH). The WTRU may detect sequence(s) , such as sequences **x** and/or **y** as described herein or sequence(s) as shown in FIGs. 6, 10, and/or 15, providing a second level of information as described herein.

ON/OFF bits and sequence(s) may be used (e.g., used jointly) to transmit information to the WTRU. For example, ON/OFF bits/bit patterns may provide a first level of information (e.g., waking up a WTRU or a group of WTRUs from a sleep state or maintain a sleep state for a WTRU or a group of WTRUS). The sequence(s) (e.g., one or more sequences, a set of sequences, sequence sets, order of sequences) may provide a second level of information. For example, the sequence(s) may be or may include information about upcoming PDCCH resources, a WTRU ID, or a WTRU group ID, etc. The WTRU may decode the second level of information if the sequence(s) matches with a preconfigured pattern.

An example implementation for a WTRU or a group of WTRUs may include one of more of the following. A WTRU may receive an OFDM signal. The WTRU may detect ON/OFF bits associated with the OFDM signal, e.g., using energy detection as described herein. The WTRU may store the received OFDM signal. If the detected ON/OFF bits match with a preconfigured bit pattern, the WTRU may wake up from a sleep state. If the detected ON/OFF bits do not match with a preconfigured bit pattern, the WTRU may maintain the sleep state. As described herein, the detected ON/OFF bits may provide a first level of information. The WTRU may detect/decode sequence(s) associated with the stored OFDM signal. As described herein, the detected sequence(s) may provide a second level of information. If the sequence(s) associated with the stored OFDM signal matches with a preconfigured sequence(s), the WTRU may perform a specified action.

A WTRU may be configured to perform a first specific action if the WTRU receives a specific bit pattern of ON/OFF bits. A WTRU may be configured to perform a second specific action if the WTRU receives a specific sequence(s), e.g., sequence(s) matching a stored/preconfigured sequence(s). As shown in FIGs. 6, 10, and/or 15, the bit pattern may be a series of binary digits. As shown in FIGs. 6, 10, and/or 15, the sequence(s) may be determined based on an OFDM signal, e.g., by applying receive processing such as a DFT, an equalization, an IDFT, and/or a channel estimation..

Upon receiving an OFDM signal, a WTRU may determine a received pattern of ON/OFF bits and the received sequence(s) associated with the OFDM signal. In examples, if the received pattern of the ON/OFF bits and the received sequence(s) match with a configured pattern of ON/OFF bits and configured sequence(s), a WTRU may wake up from a sleep state. If a received pattern of the ON/OFF bits and/or a received sequence(s) associated with an OFDM signal do not match the configured pattern of ON/OFF bits and the configured sequence(s), a WTRU may continue a sleep state (e.g., maintain the sleep state) or may perform another configured action.

The ON/OFF bits may target a group of WTRUs. For example, the ON/OFF bits/bit patterns may be WTRU-group specific. The sequence(s) may be WTRU-specific. For example, if the ON/OFF bits/bit patterns match with a preconfigured ON/OFF bits/bit patterns for a WTRU group, WTRUs in the group may wake up and/or proceed to detecting the sequence(s). If the detected sequence(s) matches with a stored/preconfigured sequence(s) for a WTRU in the group of WTRUs, the WTRU in the WTRU group may wake-up, e.g., from the sleep state. In examples, the ON/OFF bit pattern may be used as a WTRU-specific indication and the sequence(s) may be configured as a WTRU-group specific indications. In examples, the ON/OFF bit pattern and the sequence(s) may be jointly used to indicate to different sets of WTRUs in the cell, e.g., to perform a specific task.

An OFDM signal may have a repetitive structure. The receiving WTRU may use a signal having a repetitive structure (e.g., an OFDM signal) for synchronization. The OFDM signal may be transmitted more than once, e.g., to improve a signal-to-interference-plus-noise ratio (SINR). For example, the OFDM signal may be repeated (e.g., at least two times) within a slot.

In examples, the sequence **y** may be multiplexed with a known reference signal, for example, before being mapped to a set of interleaved subcarriers. For example, the output of the multiplexer may be or may include ($y_0$, $y_1$, $r_0$, $y_2$, $y_3$, $r_1$, ....). **r** = [$r_0$, $r_1$, ..., $r_K$] may be a reference signal of length K symbols. Some (e.g., each) symbols may be or may include a QPSK modulation symbol. The output of the multiplexer may be mapped to the set of interleaved subcarriers. If an OOK signal is received (e.g., upon reception of an OOK signal), the WTRU may perform a channel estimation using the reference signal. The WTRU may use the channel estimate to detect the sequence **y.**

In examples, a WTRU may skip using (e.g., not to use) the information carried by a sequence if the received SINR is low (e.g., lower than a certain value). In examples, a WTRU may be configured to ignore an estimated/detected sequence and/or not attempt to estimate/detect the sequence.

In examples, **y** may include coded and/or modulated information bits. For example, k information bits may be encoded with a channel encoder and/or modulated with a QPSK modulation. The encoded bits may have a cycle redundancy check (CRC). The CRC may be scrambled with a specific radio network temporary identifier (RNTI). The information bits may be used to convey information to a WTRU or a group of WTRUs. For example, the information may be or may include one or more of WTRU ID, WTRU group ID, information associated with PDCCH, and/or the like. The WTRU(s) may access the information. The WTRU(s) may detect (e.g., first detect) the ON/OFF bits. If the WTRU(s) detects the ON/OFF bits, the WTRU(s) may determine to proceed further to detect the information bits. FIG. 13 illustrates an example of masking based OOK generation.

Beam-based OOK may be used, e.g., for OOK waveform enhancement.

A beam-based OOK signal may be generated for WUS/GOS, e.g., one or more of the following may apply. An OFDM symbol may be generated. The time domain OFDM signal may be beamformed to one or more spatial directions, for example, within a duration of a DFT-s-OFDM symbol or an OFDM symbol. FIG. 14 illustrates an example of a beam-based OOK generation. The example shown in FIG. 14 may be for WUS/GOS with a beamformer. In the example shown in FIG. 14, different K parts of a DFT-s-OFDM symbol may be beamformed with K different beams.

K parts in a DFT-s-OFDM symbol may be orthogonal and/or non-overlapped in a time domain. The time length for a (e.g., each) part within the DFT-s-OFDM symbol may be the same. The time length for a (e.g., each) part within the DFT-s-OFDM symbol may be different.

The number of beams may be equal to or smaller than the number of parts. The number of parts associated with a beam may be determined, configured, and/or used based on one or more of following: k parts may be consecutive or distributed within a DFT-s-OFDM symbol (e.g., assuming that the k parts may be associated with a beam); k may be determined based on the number of Tx beams and/or Rx beams used; k may be determined based on at least one of the following: the number of Tx beams and/or Rx beams, the number of parts, and/or the number DFT-s-OFDM symbols used for a beam based OOK WUS/GOS transmission.

One or more parts associated with a beam may include at least one of following: control information (e.g., PDCCH) to be monitored associated with the beam; data information (e.g., PDSCH) associated with the beam; a beam reference signal (e.g., CSI-RS, synchronization signal block (SSB) and/or demodulation reference signal (DMRS) of PDCCH/PDSCH/ and/or SYNC, and/or RS) associated with a predefined sequence denoted as $\boldsymbol{s}_i \in \mathbb{C}^{M_S \times 1}$ (e.g., as described herein).

One or more parts associated with a beam may include the control information (e.g., PDCCH) to be monitored associated with the beam. A beam-specific control information may be transmitted in one or more parts associated with the beam.

One or more parts associated with a beam may include the beam reference signal (e.g., CSI-RS, SSB and/or DMRS of PDCCH/PDSCH/ and/or SYNC, and/or RS of WCSG). The beam reference signal may be associated with a predefined sequence denoted as $\boldsymbol{s}_i \in \mathbb{C}^{M_S \times 1}$ (e.g., as described herein). A set of sequences may be used, configured, and/or predefined. One of the sequences may be selected and/or determined based on a beam identity and/or a beam index. A WTRU may detect (e.g., blindly detect) the sequence used for the beam reference signal and/or identify the beam index. The WTRU may select and/or report a beam index (e.g., a preferred beam index), e.g., based on the measurement of beam reference signals and/or detected beam index. The preferred beam index may be, for example, the beam index that provides high (e.g., a highest) received signal strength (e.g., L1-reference signal received power (L1-RSRP), L1-reference signal received quality (L1-RSRQ), or L1-SINR).

The sequence(s) in one or more parts in a DFT-s-OFDM symbol may include beam-related information (e.g., a beam index and/or a panel identifier (ID)).

A beam reference signal (BRS) may be transmitted in one or more parts. The BRS sequence length may be determined based on the number of parts used for a beam reference signal transmission. For example, a first BRS sequence length may be used if the BRS is transmitted over $K_1$ parts and a second BRS sequence length may be used if the BRS is transmitted over $K_2$ parts. The first BRS sequence length may be shorter than the second BRS sequence length, for example, if $K_1 < K_2$. A longer BRS sequence length may be used if a wider beam width is used.

An input signal s may be segmented to parts as $\mathbf{s} = [\mathbf{s}_1\mathbf{s}_2 \cdots \mathbf{s}_K]_{1\times M}$. Each $\boldsymbol{s}_i$ may have same or different lengths. Each $\boldsymbol{s}_i$ may start and/or end with a number of zero element, for example, to allow transition from one beam to another. For example, it may be that $\boldsymbol{s}_i = [0 \ldots 0\ \sigma_1 \cdots \sigma_{L_i} 0 \cdots 0]$ where $\boldsymbol{\sigma}_i = [\sigma_1 \cdots \sigma_{L_i}]$ is a non-zero vector. One or more of following may apply. The number of zero elements in a (e.g., each) part of an input signal ($\boldsymbol{s}_i$) may be determined based on the number of bits transmitted in each part of the input signal. The number of zero elements in a (e.g., each) part of an input signal may be configured and/or indicated by a transmitter. No zero element may be used for a part of an input signal ($\mathbf{s}_i$), e.g., while one or more parts of the input signals may be based on one or more (e.g., all) zero elements. For example, even-numbered part input signals may be based on one or more (e.g., all) non-zero elements. Odd-numbered part input signals may be based on one or more (e.g., all) zero elements. The odd-numbered parts may be used as a gap. Reference signal and/or data may be multiplexed within a non-zero vector $\boldsymbol{\sigma}_i$ in a (e.g., each) part of an input signal. For example, one or more non-zero elements (e.g., ($\sigma_1$, $\sigma_2$) may be used as a reference signal, and the rest of non-zero elements (e.g., $\sigma_3$, ..., $\sigma_{L_i}$) may be used as data transmission (e.g., the data may be control information or unicast traffic information). In examples, vector $\mathbf{s}_i$ may be the same for K parts to assist other system functions (e.g., channel sounding, synchronization, and/or the like) and/or carrying some of system information (e.g., cell-ID, number of TX antennas, system frame number, subframe number, slot number, mini-slot number, channel or service type, etc.). In examples, vector $\boldsymbol{\sigma}_i$ may carry an identification (e.g., a unique identification) to indicate an identity of a transmitted beam to a receiver, e.g., to facilitate the beam pairing and/or beam selection process. The vector $\boldsymbol{\sigma}_i$ may carry a combination of identifications (e.g., WTRU ID, WTRU group ID, panel ID, or cell-ID, etc.) along with some common information across K parts.

As described herein, FIG. 15, e.g., along with FIGs, 5, 6, and 10, illustrates an example OOK WUS using energy detection and sequence detection associated with a OFDM signal. For example, a WTRU may detect ON/OFF bits/bit patterns using energy detection (e.g., as shown in FIGs. 5, 6, and/or 10). The ON/OFF bits/bit patterns associated with the OFDM signal may provide a first level of information (e.g., as shown in FIGs. 6 and/or 10). The ON/OFF bits/bit patterns may indicate a WTRU or a group of WTRUs to wake up from a sleep state and may indicate another WTRU and/or another group of WTRUs to maintain the sleep state as described herein. If the WTRU or the group of WTRUs wake up from the sleep state, the WTRU or the group of WTRUs may detect a sequence(s) associated with the OFDM signal (e.g., as shown in FIGs. 6 and/or 10). The detected sequence(s) may include a second level of information. For example, the sequence(s) may include a group ID(s). The sequence(s) may include information about upcoming PDCCH resource information. The sequence(s) may be used as a synchronous signal and/or a reference signal.

In examples, the instrumentalities and implementations described herein may be applied to NR, e.g., in NR licensed spectrum, in NR unlicensed spectrum, and/or other scenarios.

Although the features and elements of the present invention are described in the preferred embodiments in particular combinations, each feature or element can be used alone without the other features and elements of the preferred embodiments or in various combinations with or without other features and elements of the present invention.

Although the solutions described herein consider LTE, LTE-A, New Radio (NR), or 5G specific protocols, it is understood that the solutions described herein are not restricted to this scenario and are applicable to other wireless systems as well.

## Claims

1. A wireless transmit/receive unit, WTRU, (102) comprising:
   a processor (118) configured to:

   receive a signal from a base station while the WTRU (102) is in a sleep state, wherein the signal comprises K parts corresponding to a bit pattern of K bits, each part being a sequence and all K sequences of the signal forming a set of sequences, wherein an i-th part of the K parts corresponds to a sequence $s_i$ with non-zero complex numbers if a corresponding i-th bit $b_i$ in the bit pattern is 1 and the i-th part of the K parts corresponds to a sequence of 0s if the corresponding i-th bit $b_i$ in the bit pattern is 0;
   detect the bit pattern indicated by the signal based on energy detection;
   determine whether the bit pattern matches a configured bit pattern;
   based on a determination that the bit pattern matches the configured bit pattern, wake up from the sleep state;
   upon waking up from the sleep state, determine whether the set of sequences matches a configured sequence set; and
   based on a determination that the set of sequences matches the configured sequence set, determine a physical downlink control channel, PDCCH, resource to monitor based on the configured sequence set.

2. The WTRU of claim 1, wherein the bit pattern comprises K on and off bits, and wherein to detect the bit pattern based on the energy detection comprises the processor (118) being configured to detect the on bits if an energy is above a threshold value and to detect the off bits if the energy is below the threshold value.

**3.** The WTRU of claim 1, wherein the set of sequences further comprises one or more of a WTRU group ID or a WTRU ID, and wherein the processor (118) is further configured to:
based on the determination that the set of sequences matches the configured sequence set, determine that the signal is directed to the WTRU (102) based on the WTRU group ID or the WTRU ID matching to the WTRU.

**4.** A method comprising:

receiving a signal from a base station while a wireless transmit/receive unit, WTRU, (102) is in a sleep state, wherein the signal comprises K parts corresponding to a bit pattern of K bits, each part being a sequence and all K sequences of the signal forming a set of sequences, wherein an i-th part of the K parts corresponds to a sequence $s_i$ with non-zero complex numbers if a corresponding i-th bit $b_i$ in the bit pattern is 1 and the i-th part of the K parts corresponds to a sequence of 0s if the corresponding i-th bit $b_i$ in the bit pattern is 0;
detecting the bit pattern indicated by the signal based on energy detection;
determining whether the bit pattern matches a configured bit pattern;
based on a determination that the bit pattern matches the configured bit pattern, waking up from the sleep state;
upon waking up from the sleep state, determining whether the set of sequences matches with a configured sequence set; and
based on determination that the set of sequences matches the configured sequence set, determining a physical downlink control channel, PDCCH, resource to monitor based on the configured sequence set.

**5.** The method of claim 4, the bit pattern comprises K on and off bits, and wherein to detect the bit pattern, the method comprising:
detecting the on bits if an energy is above a threshold value and to detect the off bits if the energy is below the threshold value.

**6.** The method of claim 4, wherein the set of sequences further comprises one or more of a WTRU group ID or a WTRU ID, and the method further comprises:
based on the determination that the set of sequences matches the configured sequence set, determining that the signal is directed to the WTRU (102) based on the WTRU group ID or the WTRU ID matching to the WTRU.

**7.** The WTRU of claim 1 or the method of claim 4, wherein the set of sequences comprises a first sequence, a second sequence, and a third sequence, wherein the bit pattern comprises a first bit, a second bit, and a third bit, wherein a value of the first bit is one, a value of the second bit is one, and a value of the third bit is zero, and wherein the first sequence associated with the first bit comprises a first sequence of non-zero values, the second sequence associated with the second bit comprises a second sequence of non-zero values, and the third sequence associated with the third bit comprises a sequence of zero values.

**8.** The WTRU of claim 7 or the method of claim 7, wherein the first sequence and the second sequence are different.

**9.** The WTRU of claim 7 or the method of claim 7, wherein the first sequence and the second sequence are the same.

**10.** The WTRU of claim 1, wherein the processor is configured to:
based on a determination that the bit pattern does not match the configured bit pattern, maintain the sleep state.

**11.** The method of claim 4, wherein the method comprises:
based on a determination that the bit pattern does not match the configured bit pattern, maintaining the sleep state.

## Patentansprüche

**1.** Drahtlos-Sende- und -Empfangseinheit (Wireless Transmit/Receive Unit, WTRU) (102), die umfasst:
einen Prozessor (118), der eingerichtet ist zum:

Empfangen eines Signals von einer Basisstation, während sich die WTRU (102) in einem Schlummerzustand befindet, wobei das Signal K Teile umfasst, die einem Bitmuster von K Bits entsprechen, wobei jeder Teil eine Sequenz ist und alle K Sequenzen des Signals einen Satz von Sequenzen bilden, wobei ein i-ter Teil der K Teile einer Sequenz $s_i$ mit komplexen Zahlen ungleich Null entspricht, falls ein entsprechendes i-tes Bit $b_i$ in dem Bitmuster 1 ist, und der i-te Teil der K Teile einer Sequenz von Nullen entspricht, falls das entsprechende i-te Bit $b_i$ in dem Bitmuster 0 ist;

Detektieren des durch das Signal angegebenen Bitmusters auf der Grundlage einer Energiedetektion;

Bestimmen, ob das Bitmuster mit einem konfigurierten Bitmuster übereinstimmt;

auf der Grundlage der Bestimmung, dass das Bitmuster mit dem konfigurierten Bitmuster übereinstimmt, Aufwachen aus dem Schlummerzustand;

nach dem Aufwachen aus dem Schlummerzustand, Bestimmen, ob der Satz von Sequenzen mit einem konfigurierten Sequenzsatz übereinstimmt;

auf der Grundlage der Bestimmung, dass der Satz von Sequenzen mit dem konfigurierten Sequenzsatz übereinstimmt, Bestimmen einer zu überwachenden Physical Downlink Control Channel (PDCCH)-Ressource auf der Grundlage des konfigurierten Sequenzsatzes.

**2.** WTRU nach Anspruch 1, wobei das Bitmuster K Ein- und Aus-Bits umfasst, und wobei das Detektieren des Bitmusters auf der Grundlage der Energiedetektion umfasst, dass der Prozessor (118) dazu eingerichtet ist, die Ein-Bits zu detektieren, falls eine Energie über einem Schwellenwert liegt, und die Aus-Bits zu detektieren, wenn die Energie unter dem Schwellenwert liegt.

**3.** WTRU nach Anspruch 1, wobei der Satz von Sequenzen des Weiteren eines oder mehrere von einer WTRU-Gruppen-Kennung und einer WTRU-Kennung umfasst, und wobei der Prozessor (118) des Weiteren eingerichtet ist zum:
Bestimmen, auf der Grundlage der Bestimmung, dass der Satz von Sequenzen mit dem konfigurierten Sequenzsatz übereinstimmt, dass das Signal auf der Grundlage des Umstandes, dass die WTRU-Gruppen-Kennung oder die WTRU-Kennung zu der WTRU passt, an die WTRU (102) gerichtet wird.

**4.** Verfahren, das umfasst:

Empfangen eines Signals von einer Basisstation, während sich eine Drahtlos-Sende- und -Empfangseinheit (Wireless Transmit/Receive Unit, WTRU) (102) in einem Schlummerzustand befindet, wobei das Signal K Teile umfasst, die einem Bitmuster von K Bits entsprechen, wobei jeder Teil eine Sequenz ist und alle K Sequenzen des Signals einen Satz von Sequenzen bilden, wobei ein i-ter Teil der K Teile einer Sequenz $s_i$ mit komplexen Zahlen ungleich Null entspricht, falls ein entsprechendes i-tes Bit $b_i$ in dem Bitmuster 1 ist, und der i-te Teil der K Teile einer Sequenz von Nullen entspricht, falls das entsprechende i-te Bit $b_i$ in dem Bitmuster 0 ist;

Detektieren des durch das Signal angegebenen Bitmusters auf der Grundlage einer Energiedetektion;

Bestimmen, ob das Bitmuster mit einem konfigurierten Bitmuster übereinstimmt;

auf der Grundlage der Bestimmung, dass das Bitmuster mit dem konfigurierten Bitmuster übereinstimmt, Aufwachen aus dem Schlummerzustand;

nach dem Aufwachen aus dem Schlummerzustand, Bestimmen, ob der Satz von Sequenzen mit einem konfigurierten Sequenzsatz übereinstimmt;

auf der Grundlage der Bestimmung, dass der Satz von Sequenzen mit dem konfigurierten Sequenzsatz übereinstimmt, Bestimmen einer zu überwachenden Physical Downlink Control Channel (PDCCH)-Ressource auf der Grundlage des konfigurierten Sequenzsatzes.

**5.** Verfahren nach Anspruch 4, wobei das Bitmuster K Ein- und Aus-Bits umfasst, und wobei das Verfahren, um das Bitmuster zu detektieren, umfasst:
Detektieren der Ein-Bits, falls eine Energie über einem Schwellenwert liegt, und Detektieren der Aus-Bits, falls die Energie unter dem Schwellenwert liegt.

**6.** Verfahren nach Anspruch 4, wobei der Satz von Sequenzen des Weiteren eines oder mehrere von einer WTRU-Gruppen-Kennung und einer WTRU-Kennung umfasst, und das Verfahren des Weiteren umfasst:
Bestimmen, auf der Grundlage der Bestimmung, dass der Satz von Sequenzen mit dem konfigurierten Sequenzsatz übereinstimmt, dass das Signal auf der Grundlage des Umstandes, dass die WTRU-Gruppen-Kennung oder die WTRU-Kennung zu der WTRU passt, an die WTRU (102) gerichtet wird.

**7.** WTRU nach Anspruch 1 oder Verfahren nach Anspruch 4, wobei der Satz von Sequenzen eine erste Sequenz, eine zweite Sequenz und eine dritte Sequenz umfasst, wobei das Bitmuster ein erstes Bit, ein zweites Bit und ein drittes Bit umfasst, wobei ein Wert des ersten Bits eins ist, ein Wert des zweiten Bits eins ist, und ein Wert des dritten Bits null ist, und wobei die erste Sequenz, die mit dem ersten Bit verknüpft ist, eine erste Sequenz von Werten ungleich Null umfasst, die zweite Sequenz, die mit dem zweiten Bit verknüpft ist, eine zweite Sequenz von Werten ungleich Null umfasst, und die dritte Sequenz, die mit dem dritten Bit verknüpft ist, eine Sequenz von Werten gleich Null umfasst.

**8.** WTRU nach Anspruch 7 oder Verfahren nach Anspruch 7, wobei die erste Sequenz und die zweite Sequenz verschieden sind.

**9.** WTRU nach Anspruch 7 oder Verfahren nach Anspruch 7, wobei die erste Sequenz und die zweite Sequenz gleich sind.

**10.** WTRU nach Anspruch 1, wobei der Prozessor eingerichtet ist zum:
Beibehalten des Schlummerzustands auf der Grundlage der Bestimmung, dass das Bitmuster nicht mit dem konfigurierten Bitmuster übereinstimmt.

**11.** Verfahren nach Anspruch 4, wobei das Verfahren umfasst:
Beibehalten des Schlummerzustands auf der Grundlage der Bestimmung, dass das Bitmuster nicht mit dem konfigurierten Bitmuster übereinstimmt.

**Revendications**

**1.** Unité émettrice-réceptrice sans fil, WTRU, (102) comprenant :
un processeur (118) configuré pour :

> recevoir un signal depuis une station de base pendant que la WTRU (102) est dans un état de sommeil, dans laquelle le signal comprend K parties correspondant à un motif binaire de K bits, chaque partie étant une séquence et toutes les K séquence du signal formant un ensemble de séquences, dans laquelle une ième partie des K parties correspond à une séquence $s_i$ avec des nombres complexes différents de zéro si un ième bit $b_i$ correspondant dans le motif binaire est 1 et la ième partie des K parties correspond à une séquence de 0 si le ième bit $b_i$ correspondant dans le motif binaire est 0 ;
> détecter le motif binaire indiqué par le signal sur la base d'une détection d'énergie ;
> déterminer si le motif binaire correspond ou non à un motif binaire configuré ;
> sur la base d'une détermination que le motif binaire correspond au motif binaire configuré, réveiller de l'état de sommeil ;
> lors du réveil de l'état de sommeil, déterminer si l'ensemble de séquences correspond ou non à un ensemble de séquences configuré ; et
> sur la base d'une détermination que l'ensemble de séquences correspond à l'ensemble de séquences configuré, déterminer une ressource de canal de commande de liaison descendante physique, PDCCH, à surveiller sur la base de l'ensemble de séquences configuré.

**2.** WTRU selon la revendication 1, dans laquelle le motif binaire comprend K bits d'activation et de désactivation, et dans laquelle la détection du motif binaire sur la base de la détection d'énergie comprend le fait que le processeur (118) est configuré pour détecter les bits d'activation si une énergie est supérieure à une valeur seuil et pour détecter les bits de désactivation si l'énergie est inférieure à la valeur seuil.

**3.** WTRU selon la revendication 1, dans laquelle l'ensemble de séquences comprend en outre un ou plusieurs d'un identifiant de groupe de WTRU et d'un identifiant de WTRU, et dans laquelle le processeur (118) est en outre configuré pour :
sur la base de la détermination que l'ensemble de séquences correspond à l'ensemble de séquences configuré, déterminer que le signal est dirigé vers la WTRU (102) sur la base du fait que l'identifiant de groupe de WTRU ou l'identifiant de WTRU correspond à la WTRU.

**4.** Procédé comprenant :

> la réception d'un signal depuis une station de base pendant qu'une unité émettrice-réceptrice sans fil, WTRU, (102) est dans un état de sommeil, dans lequel le signal comprend K parties correspondant à un motif binaire de K bits, chaque partie étant une séquence et toutes les K séquence du signal formant un ensemble de séquences, dans lequel une ième partie des K parties correspond à une séquence $s_i$ avec des nombres complexes différents de zéro si un ième bit $b_i$ correspondant dans le motif binaire est 1 et la ième partie des K parties correspond à une séquence de 0 si le ième bit $b_i$ correspondant dans le motif binaire est 0 ;
> la détection du motif binaire indiqué par le signal sur la base d'une détection d'énergie ;
> la détermination si le motif binaire correspond ou non à un motif binaire configuré ;
> sur la base d'une détermination que le motif binaire correspond au motif binaire configuré, le réveil de l'état de sommeil ;
> lors du réveil de l'état de sommeil, la détermination si l'ensemble de séquences correspond ou non à un ensemble de séquences configuré ; et
> sur la base d'une détermination que l'ensemble de séquences correspond à l'ensemble de séquences configuré, la détermination d'une ressource de canal de commande de liaison descendante physique, PDCCH, à surveiller sur la base de l'ensemble de séquences configuré.

**5.** Procédé selon la revendication 4, dans lequel le motif binaire comprend K bits d'activation et de désactivation, et dans lequel, pour détecter le motif binaire, le procédé comprend :
la détection des bits d'activation si une énergie est supérieure à une valeur seuil et la détection des bits de désactivation si l'énergie est inférieure à la valeur seuil.

**6.** Procédé selon la revendication 4, dans lequel l'ensemble de séquences comprend en outre un ou plusieurs d'un identifiant de groupe de WTRU et d'un identifiant de WTRU, et le procédé comprend en outre :
sur la base de la détermination que l'ensemble de séquences correspond à l'ensemble de séquences configuré, la détermination que le signal est dirigé vers la WTRU (102) sur la base du fait que l'identifiant de groupe de WTRU ou l'identifiant de WTRU correspond à la WTRU.

**7.** WTRU selon la revendication 1 ou procédé selon la revendication 4, dans lequel l'ensemble de séquences comprend une première séquence, une deuxième séquence et une troisième séquence, dans lequel le motif binaire comprend un premier bit, un deuxième bit et un troisième bit, dans lequel une valeur du premier bit est un, une valeur du deuxième bit est un, et une valeur du troisième bit est zéro, et dans lequel la première séquence associée au premier bit comprend une première séquence de valeurs différentes de zéro, la deuxième séquence associée au deuxième bit comprend une deuxième séquence de valeurs différentes de zéro, et la troisième séquence associée au troisième bit comprend une séquence de valeurs égales à zéro.

**8.** WTRU selon la revendication 7 ou procédé selon la revendication 7, dans lequel la première séquence et la deuxième séquence sont différentes.

**9.** WTRU selon la revendication 7 ou procédé selon la revendication 7, dans lequel la première séquence et la deuxième séquence sont identiques.

**10.** WTRU selon la revendication 1, dans laquelle le processeur est configuré pour :
sur la base d'une détermination que le motif binaire ne correspond pas au motif binaire configuré, maintenir l'état de sommeil.

**11.** Procédé selon la revendication 4, dans lequel le procédé comprend :
sur la base d'une détermination que le motif binaire ne correspond pas au motif binaire configuré, le maintien de l'état de sommeil.

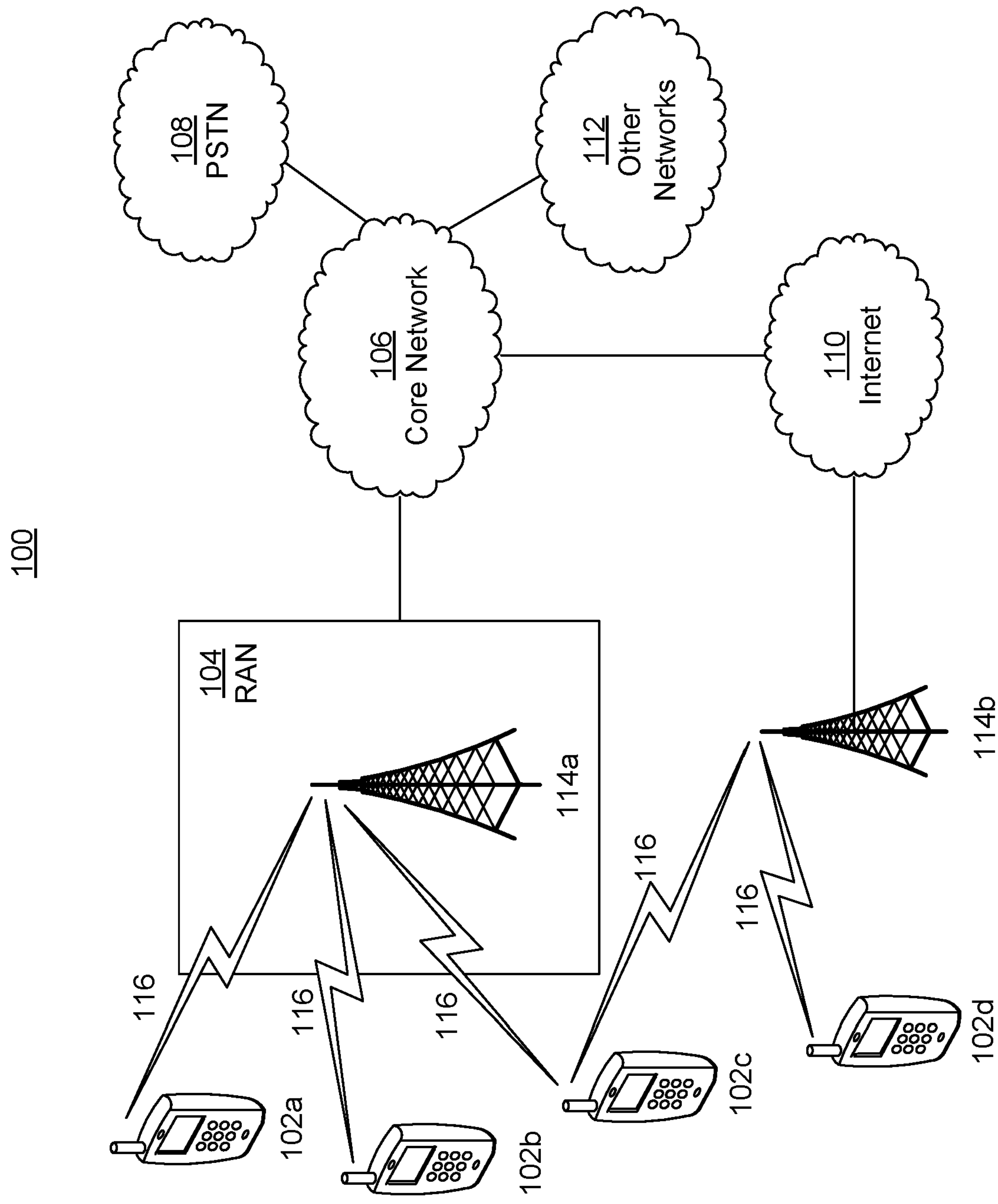
100
108
PSTN
112
Other
Networks
106
Core Network
110
Internet
104
RAN
114a
114b
116
116
116
116
116
102a
102b
102c
102d

FIG. 1A

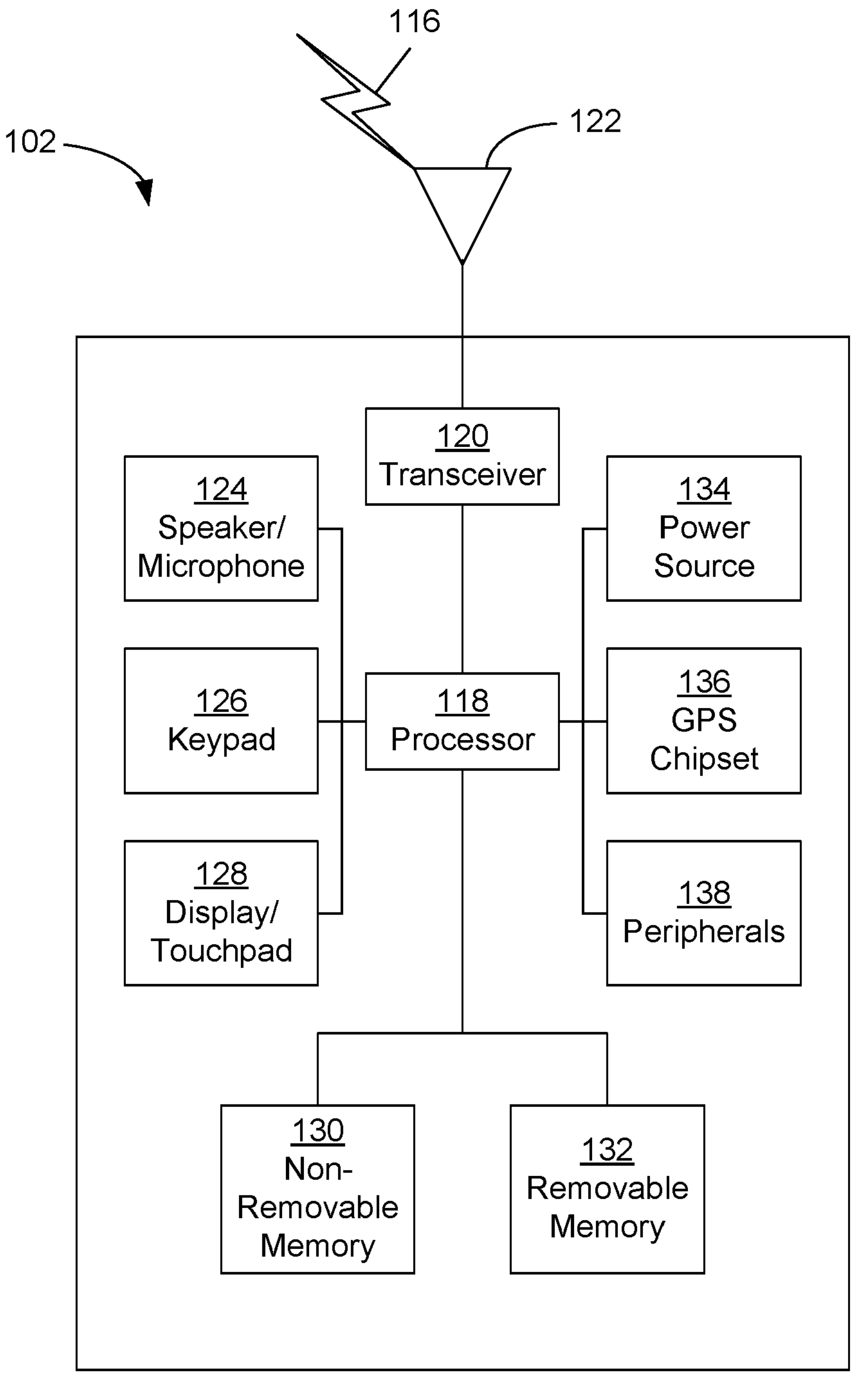
116
102
122
120
Transceiver
124
Speaker/
Microphone
134
Power
Source
126
Keypad
118
Processor
136
GPS
Chipset
128
Display/
Touchpad
138
Peripherals
130
Non-
Removable
Memory
132
Removable
Memory

FIG. 1B

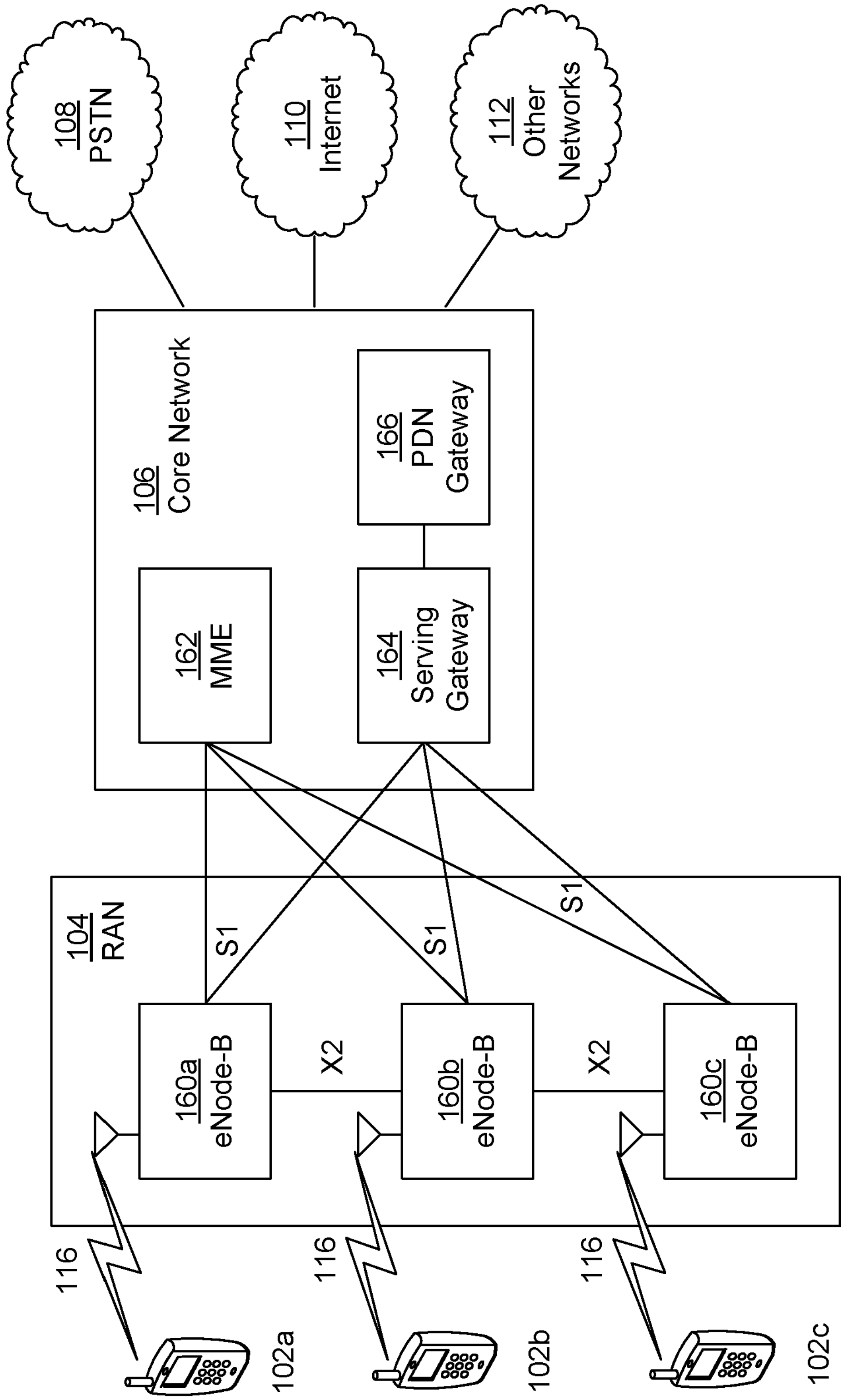
108
PSTN
110
Internet
112
Other
Networks
106
Core Network
162
MME
164
Serving
Gateway
166
PDN
Gateway
104
RAN
S1
S1
S1
160a
eNode-B
X2
160b
eNode-B
X2
160c
eNode-B
116
116
116
102a
102b
102c

FIG. 1C

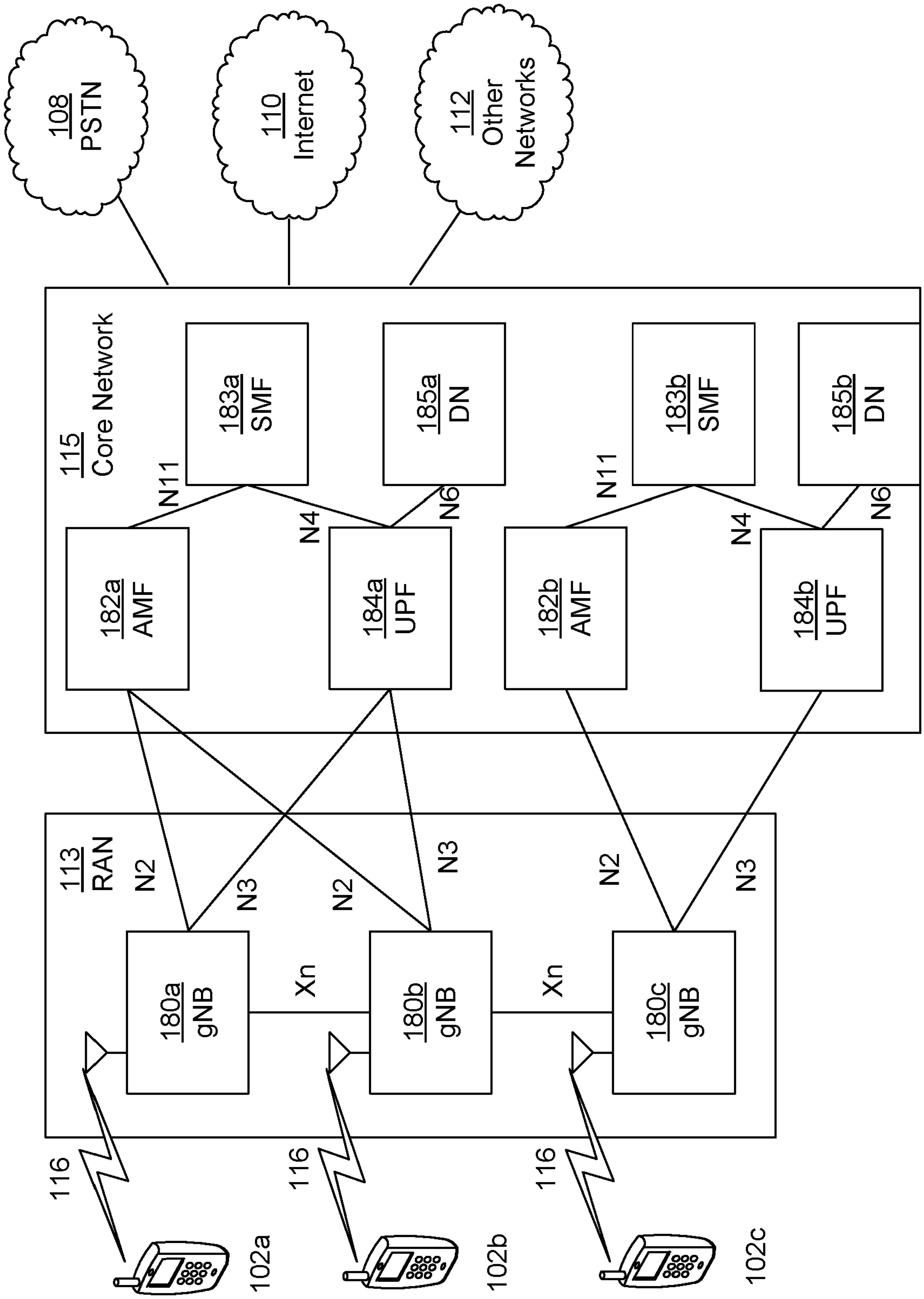
108
PSTN
110
Internet
112
Other
Networks
115
Core Network
183a
SMF
185a
DN
183b
SMF
185b
DN
182a
AMF
184a
UPF
182b
AMF
184b
UPF
N11
N4
N6
N11
N4
N6
113
RAN
N2
N3
N2
N3
N2
N3
180a
gNB
180b
gNB
180c
gNB
Xn
Xn
116
116
116
102a
102b
102c

FIG. 1D

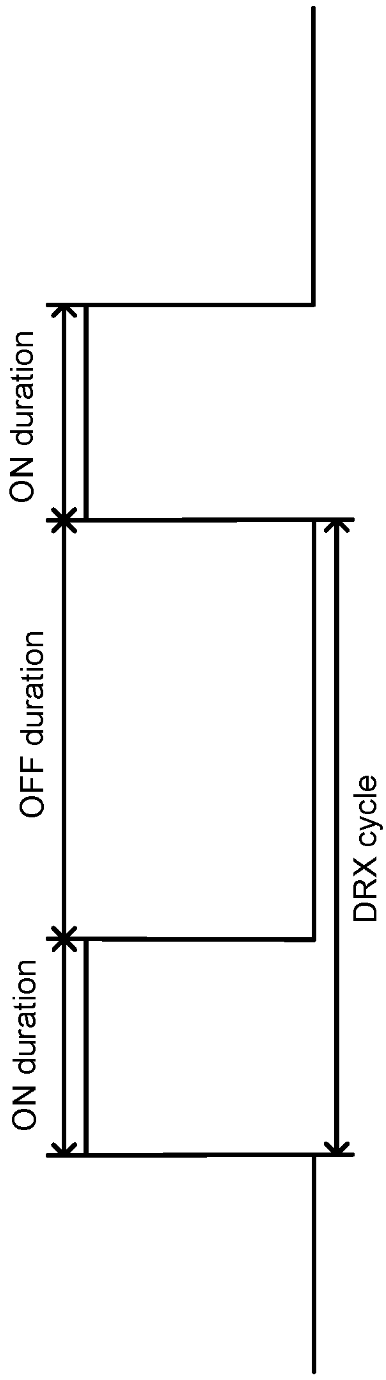
ON duration
OFF duration
ON duration
DRX cycle

FIG. 2A

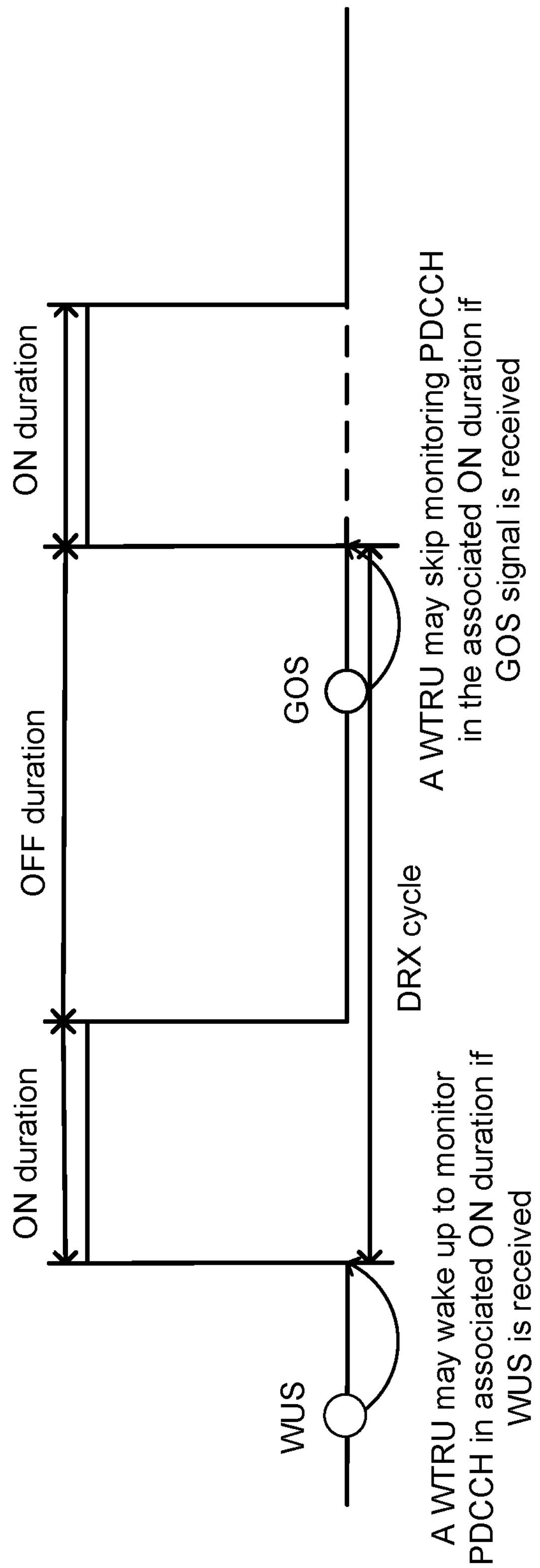
ON duration
OFF duration
ON duration
WUS
GOS
DRX cycle
A WTRU may wake up to monitor PDCCH in associated ON duration if WUS is received
A WTRU may skip monitoring PDCCH in the associated ON duration if GOS signal is received

FIG. 2B

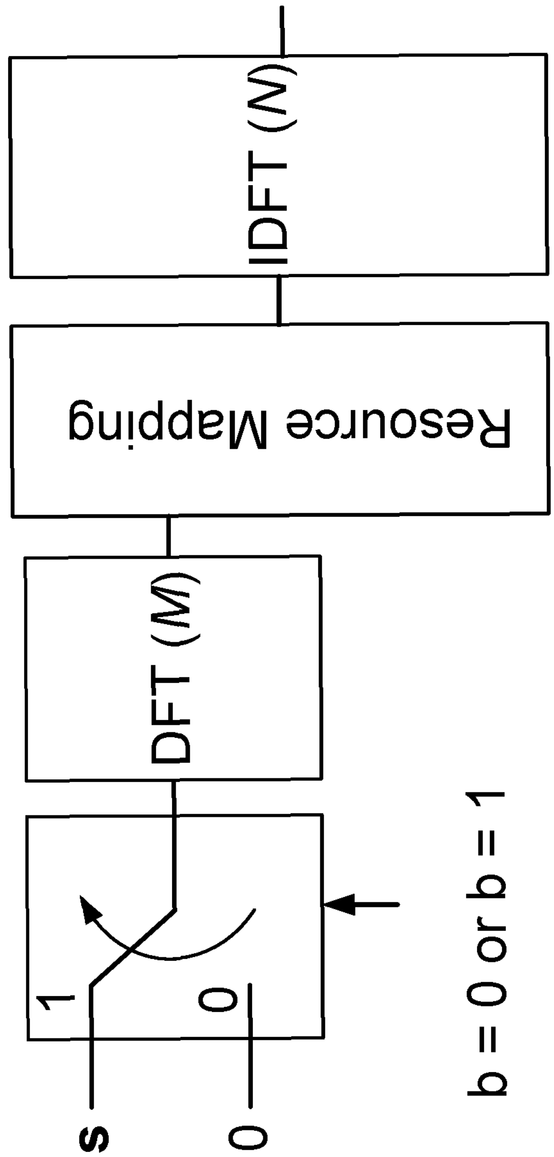


FIG. 3

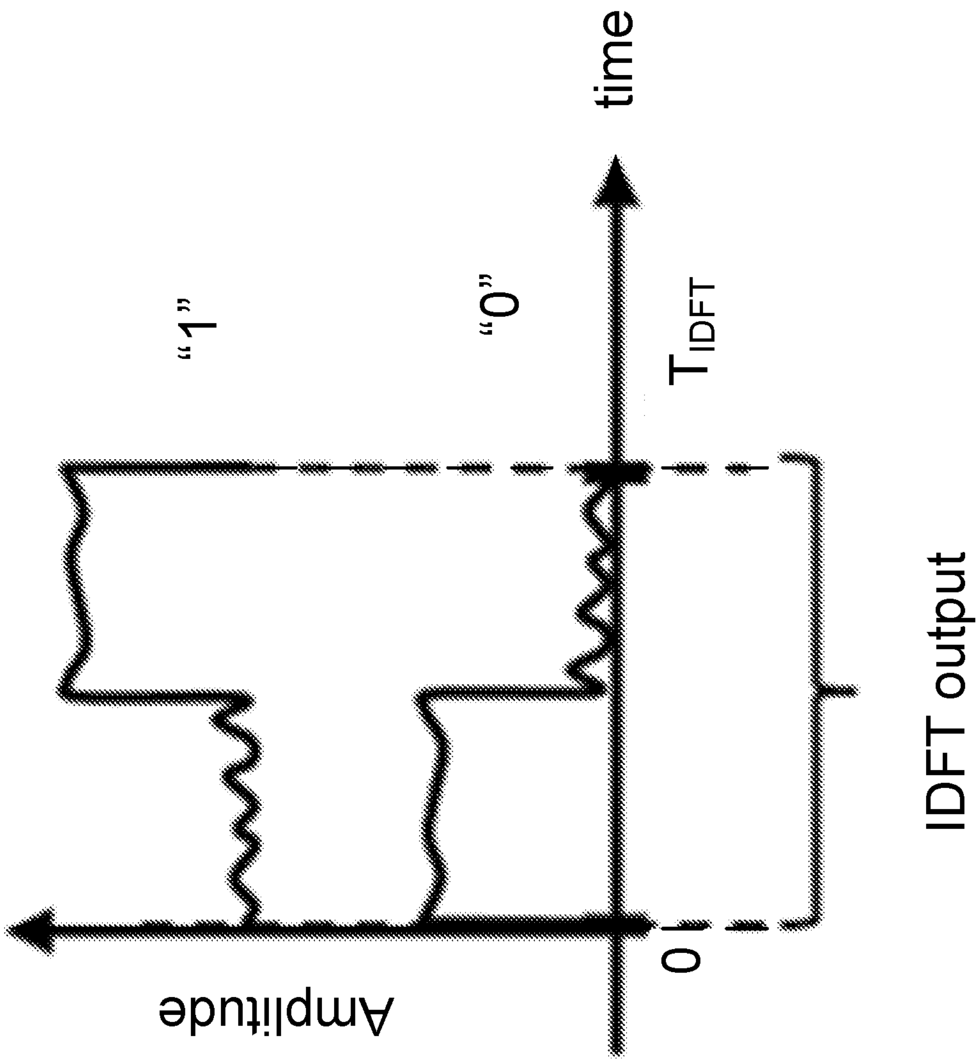


FIG. 4

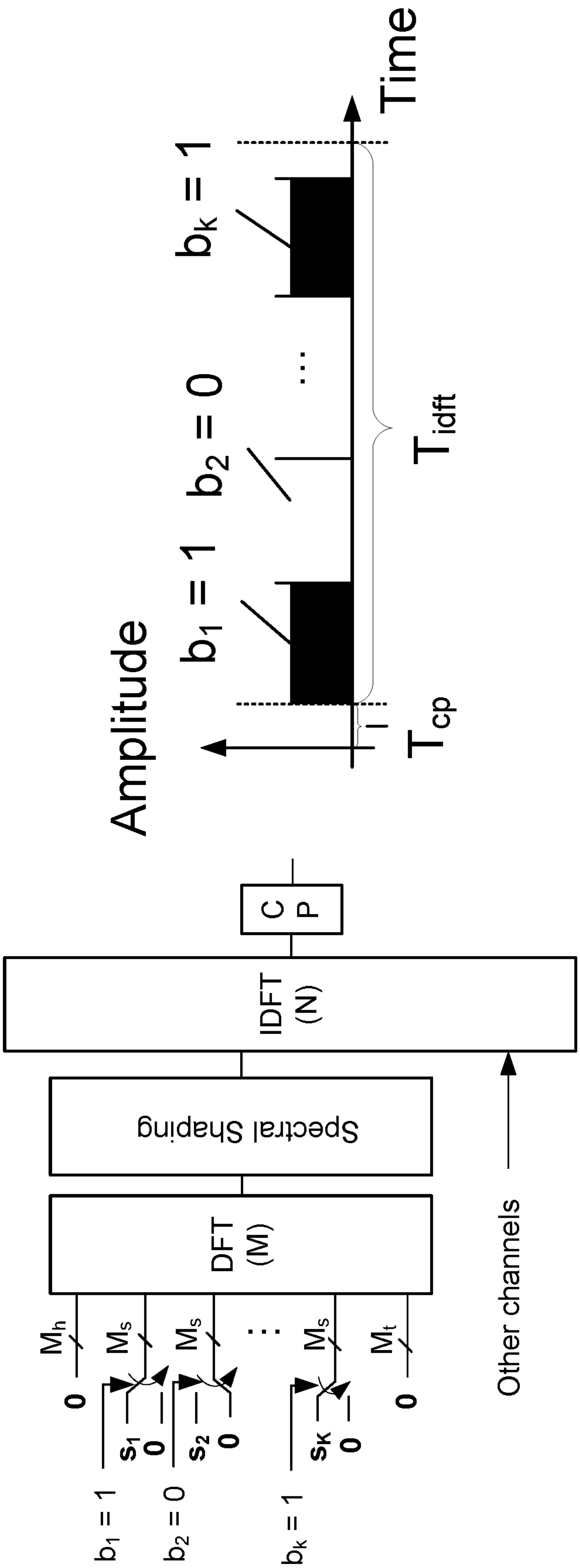

b1 = 1
b2 = 0
bk = 1
s1
s2
sK
0
Mh
Ms
Mt
DFT (M)
Spectral Shaping
IDFT (N)
C P
Other channels
Amplitude
Time
b1 = 1
b2 = 0
bk = 1
Tcp
Tidft


FIG. 5

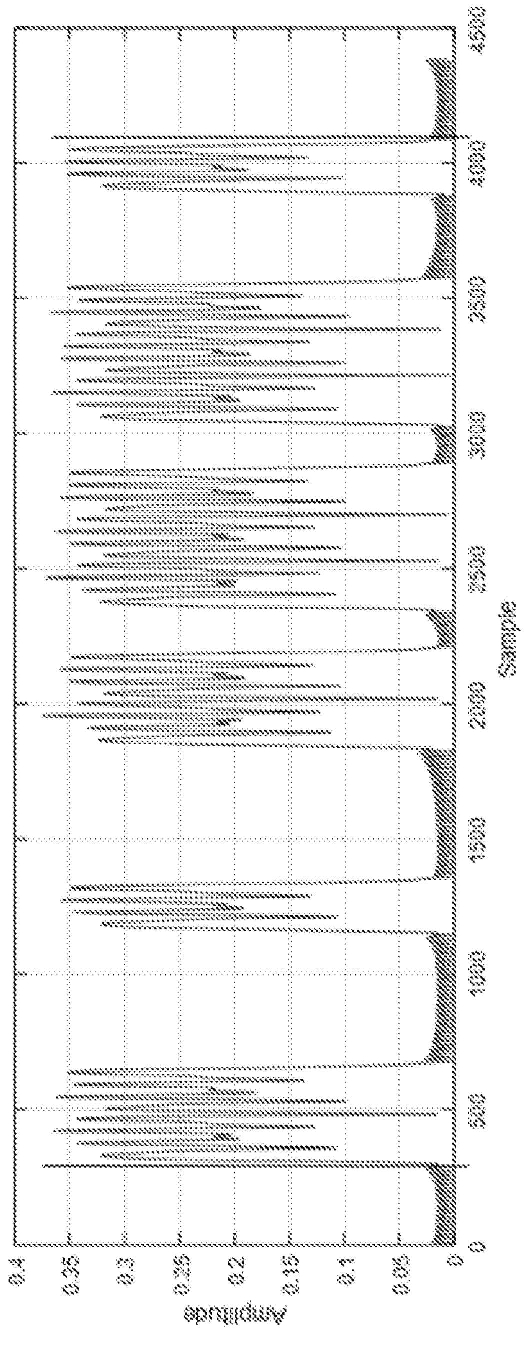
Amplitude
Sample

FIG. 6

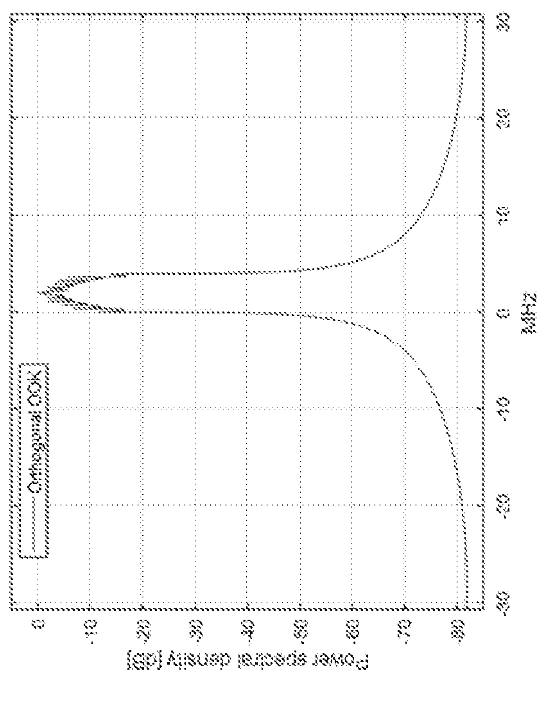
Orthogonal OOK
Power spectral density [dB]
MHz

FIG. 7

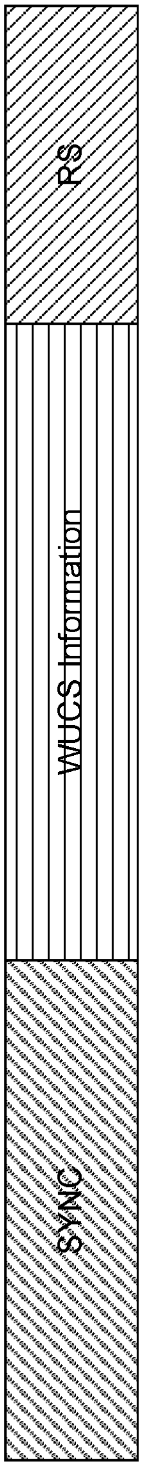
SYNC
WUCS Information
RS

FIG. 8

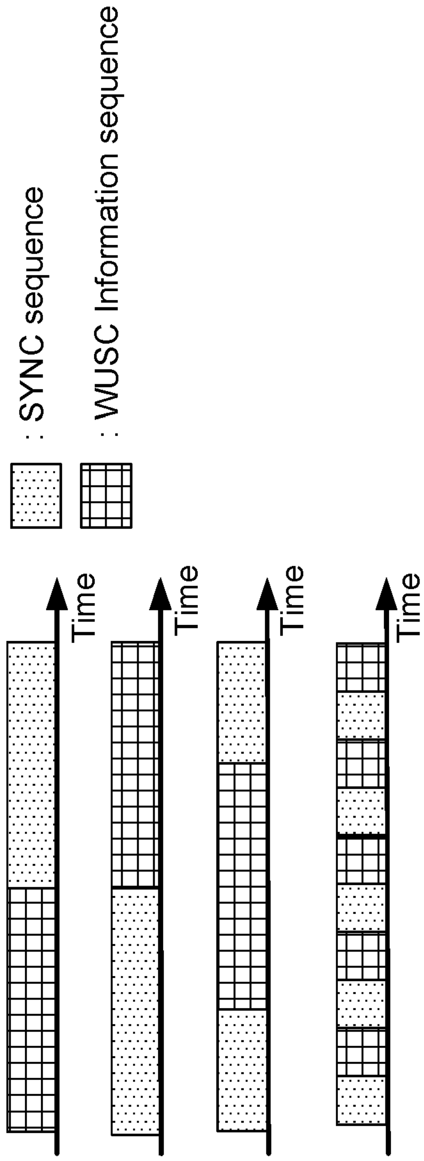
: SYNC sequence
: WUSC Information sequence
Time
Time
Time
Time

FIG. 9

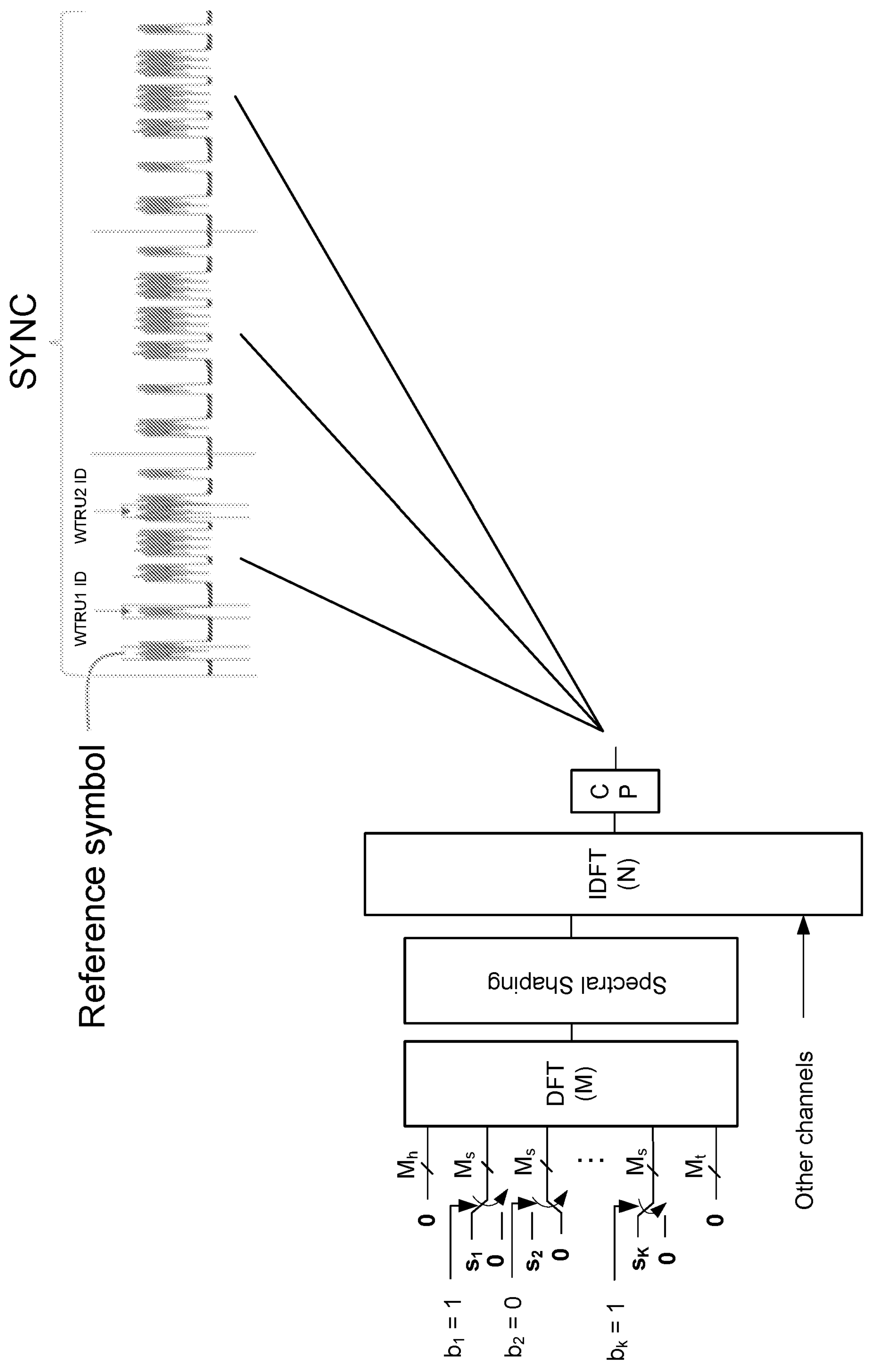
Reference symbol
SYNC
WTRU1 ID
WTRU2 ID
$b_1 = 1$
$b_2 = 0$
$b_k = 1$
$s_1$
$s_2$
$s_K$
0
$M_h$
$M_s$
$M_t$
DFT (M)
Spectral Shaping
IDFT (N)
C P
Other channels

FIG. 10

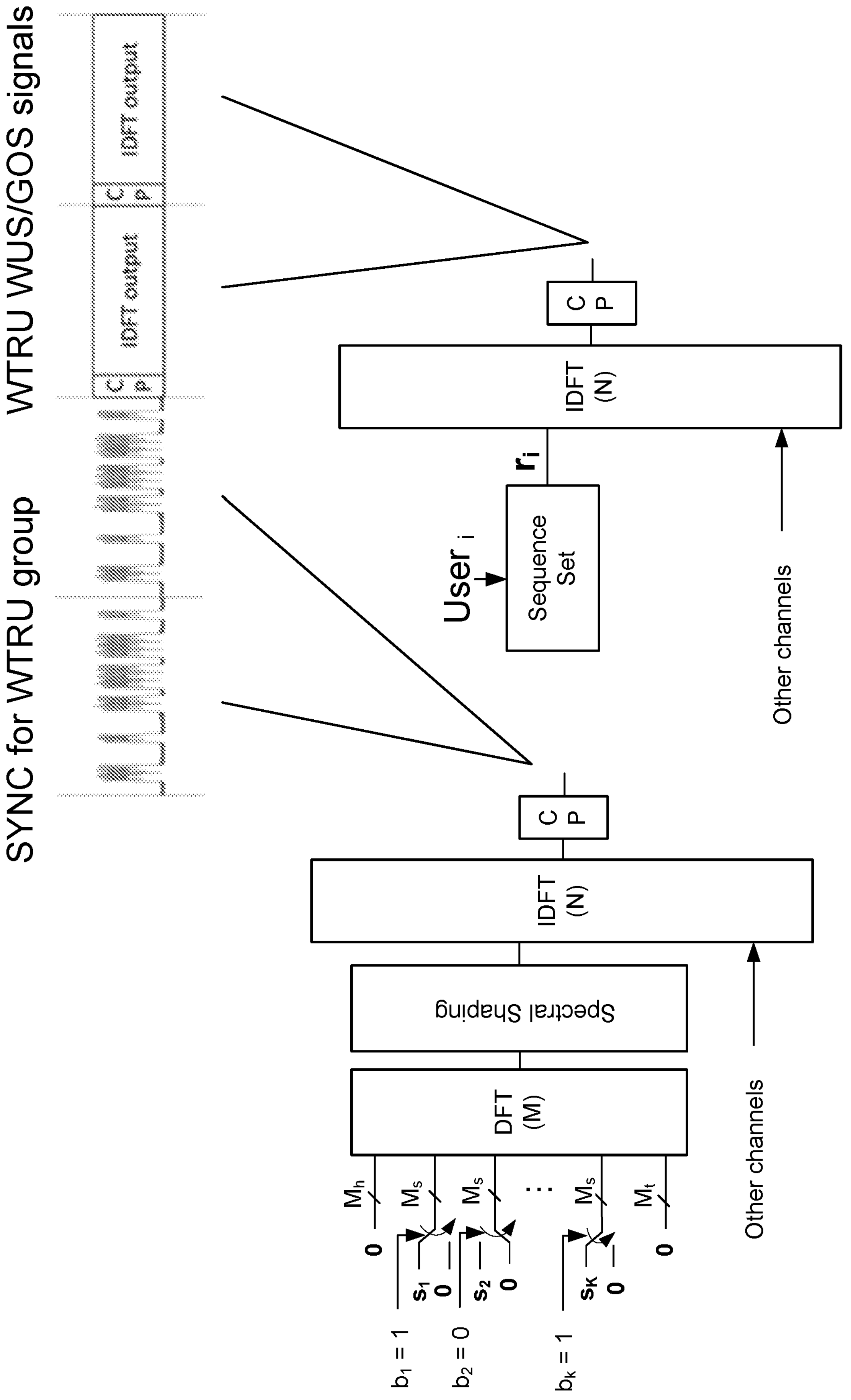
SYNC for WTRU group
WTRU WUS/GOS signals
C P
IDFT output
C P
IDFT output
User i
Sequence Set
$r_i$
IDFT (N)
C P
Other channels
$b_1 = 1$
$b_2 = 0$
$b_k = 1$
$s_1$
$s_2$
$s_K$
0
$M_h$
$M_s$
$M_t$
DFT (M)
Spectral Shaping
IDFT (N)
C P
Other channels

FIG. 11

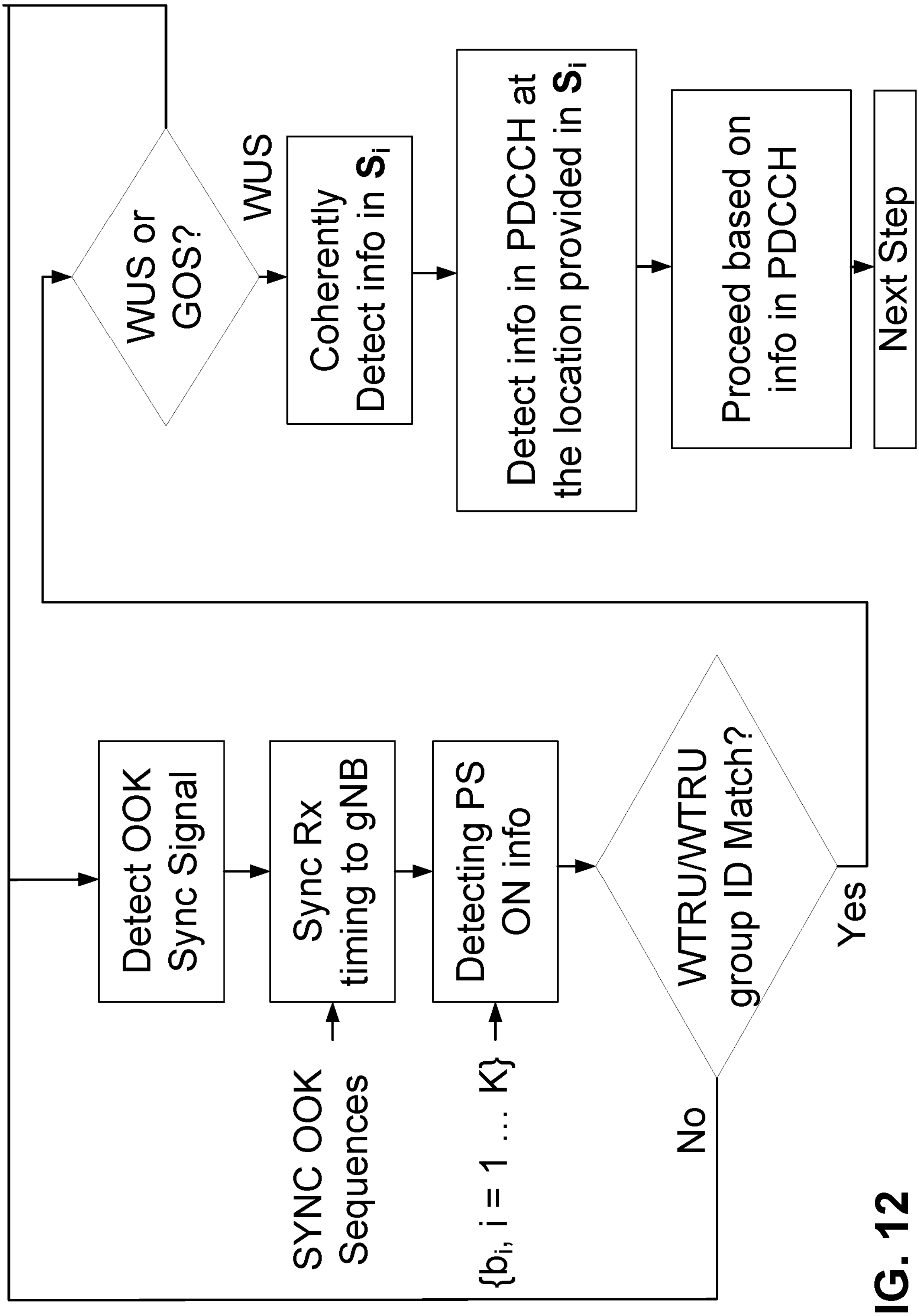
Detect OOK Sync Signal
SYNC OOK Sequences
Sync Rx timing to gNB
{$b_i$, i = 1 … K}
Detecting PS ON info
WTRU/WTRU group ID Match?
No
Yes
WUS or GOS?
WUS
Coherently Detect info in $S_i$
Detect info in PDCCH at the location provided in $S_i$
Proceed based on info in PDCCH
Next Step

FIG. 12

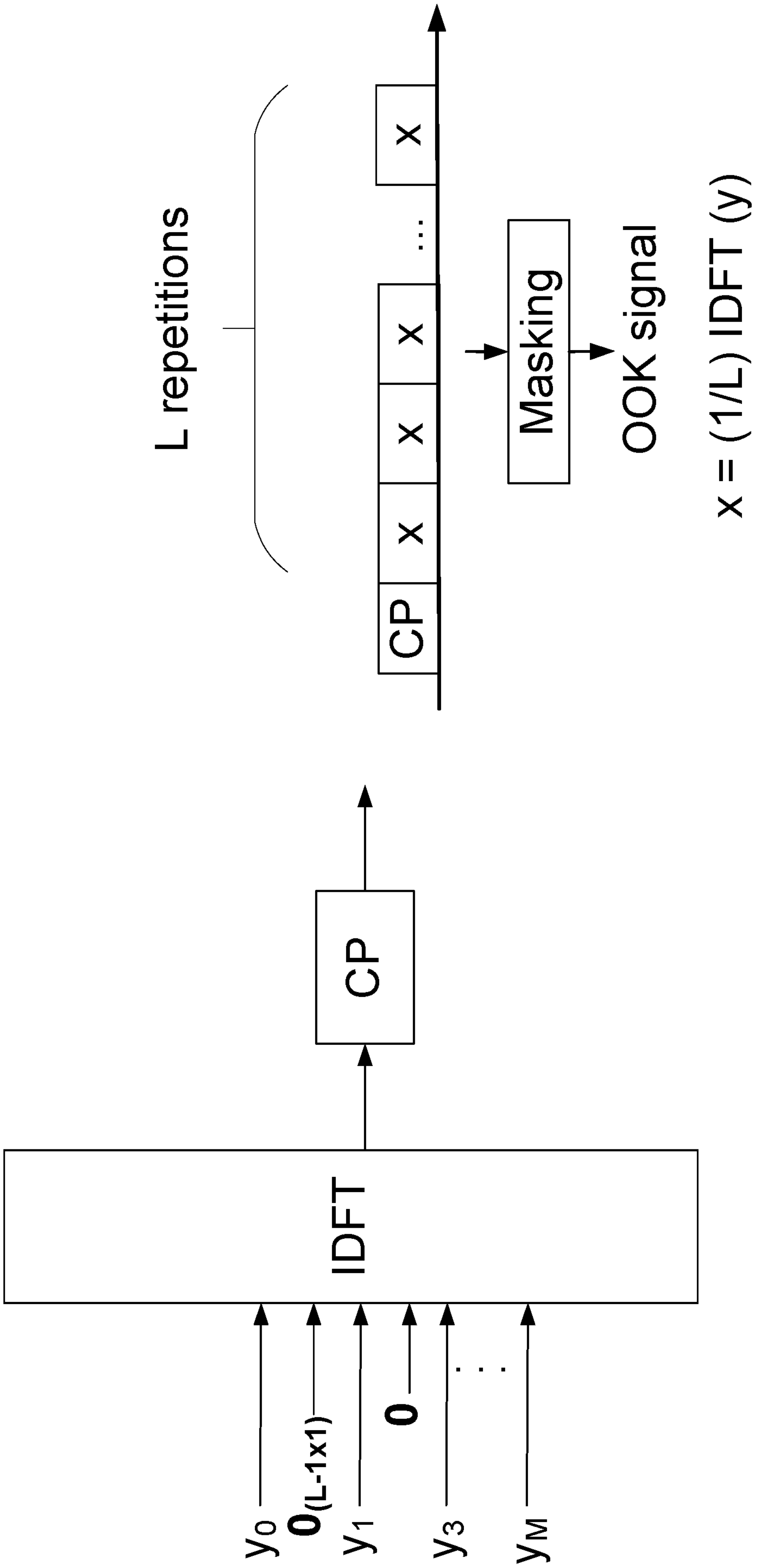
L repetitions
CP
x
x
x
x
...
x
Masking
OOK signal
x = (1/L) IDFT (y)
IDFT
CP
y0
0(L-1x1)
y1
0
y3
. . .
yM

FIG. 13

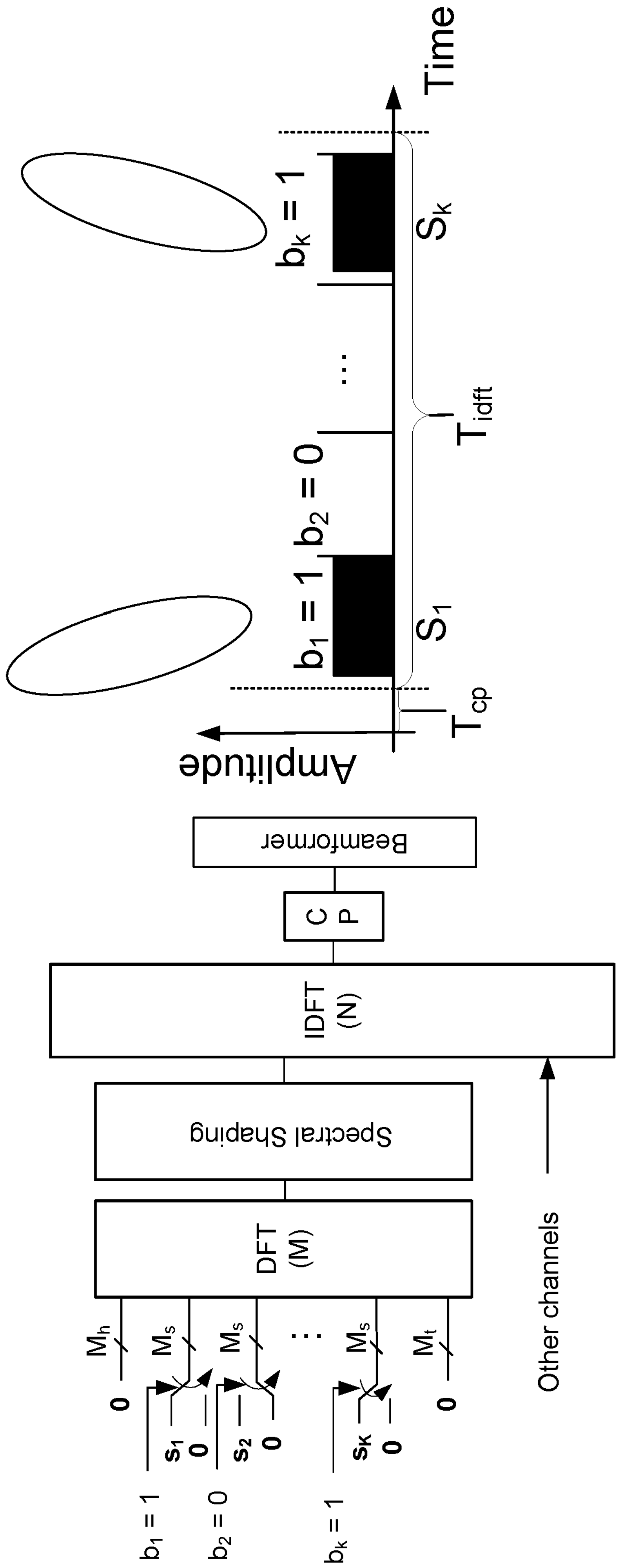
b1 = 1
b2 = 0
bk = 1
s1
s2
sK
0
Mh
Ms
Mt
DFT (M)
Spectral Shaping
IDFT (N)
C P
Beamformer
Other channels
Amplitude
Time
b1 = 1
b2 = 0
bk = 1
S1
Sk
Tcp
Tidft

FIG. 14

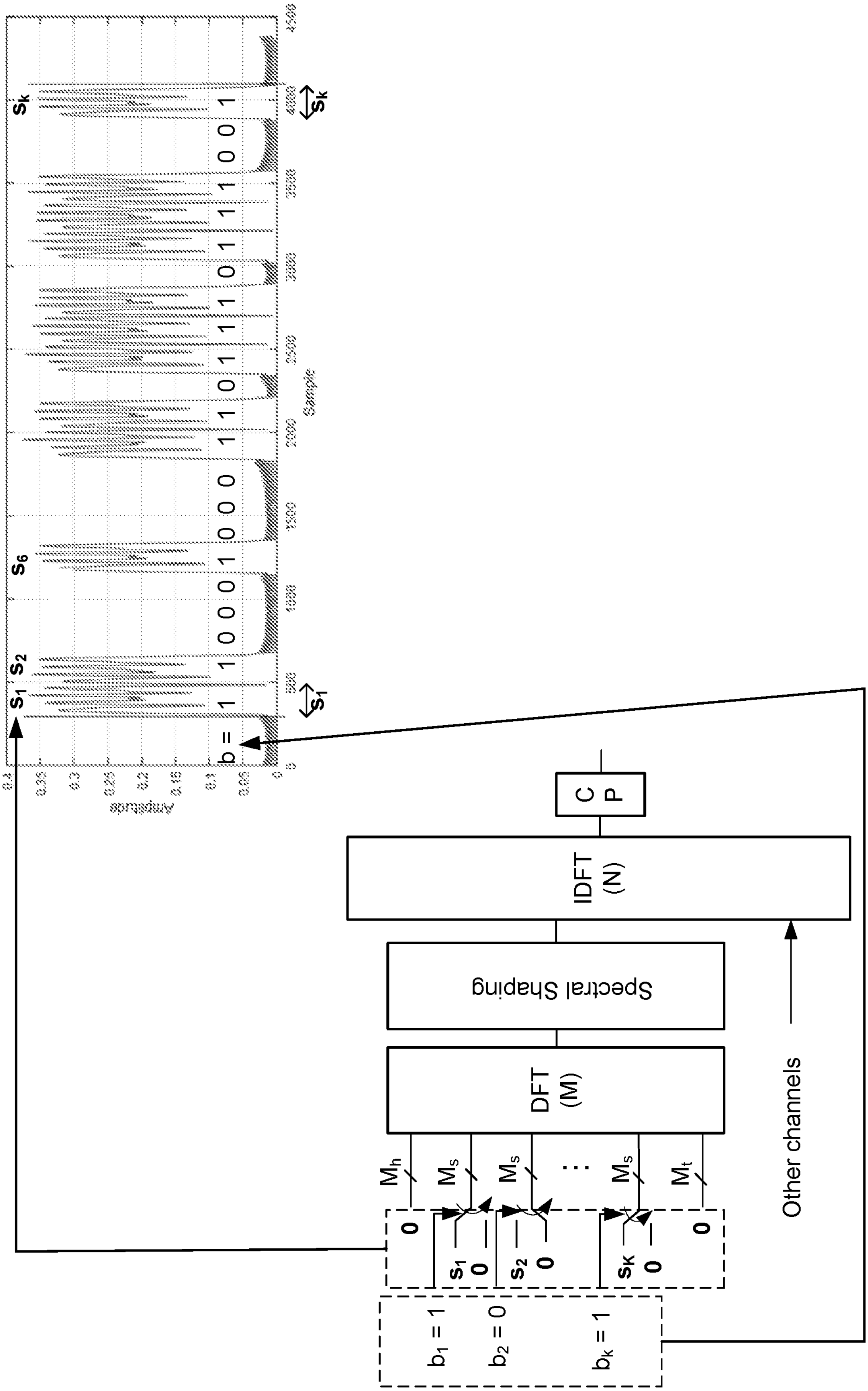
Amplitude
Sample
$s_1$
$s_2$
$s_6$
$s_k$
b =
1 1 0 0 0 1 0 0 0 1 1 0 1 1 1 0 1 1 1 0 0 1
$b_1 = 1$
$b_2 = 0$
$b_k = 1$
$s_1$ 0
$s_2$ 0
$s_K$ 0
0
$M_h$
$M_s$
$M_t$
DFT (M)
Spectral Shaping
IDFT (N)
C P
Other channels

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170332327 A
- US 20180041959 A